# EUROPEAN PATENT APPLICATION

(11) **EP 3 767 924 A1**
(43) Date of publication of application: **20.01.2021**
(21) Application number: 20173787.1
(22) Date of filing: 09.05.2020
(51) Int. Cl.: H04L 29/08, G06Q 50/00

(54) **METHODS AND SYSTEMS FOR ESTABLISHING CONNECTION BETWEEN USERS VIA STRUCTURED COMMUNICATION**

(30) Priority: 25.06.2019 US 201916451347
(71) Applicant: Zoumpoulakis, Panagiotis, 84539 Ampfing Bayern (DE)
(72) Inventor: Zoumpoulakis, Panagiotis, 84539 Ampfing Bayern (DE)

(57) **Abstract**

The present disclosure provides a computer implemented method for creating structured communication between users. The method includes receiving, by a processor associated with a server system, a connection request from a device associated with a first user. The processor facilitates a first set of questions to the first user. The processor thereafter receives a response for each of the first set of questions from the first user. A first evaluation input is received by the processor from evaluating the response for each of the first set of questions. The first evaluation input is generated from at least one of a manual input from a second user associated with the first set of questions and an automatic input based on analyzing the response. The processor thereafter establishes a connection between the first user and the second user based at least in part on the first evaluation input.

## Description

### TECHNICAL FIELD

The present disclosure relates to methods and systems for social networks, more particularly, to methods and systems for establishing a connection between users via a structured communication.

### BACKGROUND

In recent years, with the rise of smartphones and the internet, communication networks have evolved rapidly across the globe. As such, numerous platforms such as social networks, messengers, dating applications and the like, are used extensively through the communication networks connecting users on a local and/or global scale.

These platforms include information of various users such as representations of users (for *e.g.* profile of users), social links of the users, and the like. Users are normally required to voluntarily provide the relevant information as per the purpose of the platforms, in order to create their representations in the platforms. The information provided by the users is accessible to each other in a platform and based on such available information users can make a decision as to whom they should connect with over the platform. Such a method of establishing connections between users may be detrimental to user privacy, as the information pertaining to the user are mostly accessible by other users. Moreover, user representation based on the aggregation of information provided by the users on creates a static and a monolithic simulacrum of the user, which leads to a restricted way of creating connections, since the information cannot keep up with dynamics and alterations of user personality. Though users may update their information regularly in these platforms, the information provided still cannot keep up with the dynamics of each user such as temperament, progressing and alternating feeling, interests, desires and the like, which alter based on the situation the users are subjected to.

Additionally, a majority of these platforms requires an establishment of a connection between two users for enabling any interaction. Such a requirement may prompt the users to connect merely with the intention of the interaction while skipping the need for an in-depth understanding of the personality of the connected user. Such requirement creates a restricted or defective connection between users, as more often users may tend to have unstructured or unproductive conversation, due to lack of understanding of personalities of the connected user. Further, platforms such as dating applications and the like may exclusively orient towards dating or for creating amorous relations, while putting aside other types of connections. As such, such platforms mostly function as matchmaking intermediaries acting on a restricted purpose, and therefore cannot fulfill the need for the purpose of the randomness of real-life human interaction. Furthermore, platforms such as social networks, assist in creating connections between users only based on an existing connection. Thus, if the user lacks one such connection, then creating connections with other users is difficult or the user may be forced to adopt unreliable attempts which are audacious to create connections with other users. This unreliable attempt may result in a warning for other users against connecting with that user as other users consider only the profile data prior to attempting the connection.

Therefore, there exists a need for techniques for developing a content rich communicative unit created as an interchangeable data unit, which establishes connection between users in a more structured way and which can overcome one or more limitations stated above, in addition to providing other technical advantages.

### SUMMARY

Various embodiments of the present disclosure provide methods and systems for creating structured communication that leads to filtered connection between users.

In an embodiment of the present invention, the present disclosure provides a computer implemented method for creating structured communication between users. The method includes receiving, by a processor associated with a server system, a connection request from a device associated with a first user. The processor facilitates a first set of questions to the first user. The processor thereafter receives a response for each of the first set of questions from the first user. A first evaluation input is received by the processor from evaluating the response for each of the first set of questions. The first evaluation input is generated from at least one of: a manual input from a second user associated with the first set of questions and an automatic input based on analyzing the response. The processor thereafter establishes a connection between the first user and the second user based at least in part on the first evaluation input.

The present disclosure also provides a server system. The server system includes a memory including stored instructions and a processor configured to execute the stored instructions. The processor based on the stored instructions performs, receiving the connection request from the device associated with the first user. The processor facilitates the first set of questions to the first user. The processor thereafter receives the response for each of the first set of question from the first user. The first evaluation input is received by the processor from evaluating the response for each of the first set of questions. The first evaluation input is generated from at least one of: the manual input from a second user associated with the first set of questions and the automatic input based on analyzing the response. The processor thereafter establishes the connection between the first user and the second user based at least in part on the first evaluation input.

### BRIEF DESCRIPTION OF THE FIGURES

For a more complete understanding of example embodiments of the present disclosure, reference is now made to the following descriptions taken in connection with the accompanying drawings in which:
FIG. 1 is an example representation of an environment related to at least some example embodiments of the present disclosure;
FIG. 2 shows an example representation of an environment related to at least some additional embodiments of the present disclosure;
FIG. 3 shows an example representation of an environment related to at least some additional embodiments of the present disclosure;
FIG. 4 shows an example schematic representation of operations related to at least some example embodiments of the present disclosure;
FIG. 5 is a flow diagram depicting the overall method for establishing structured communication between users, in accordance with an exemplary embodiment of the present disclosure;
FIG. 6 is a flow diagram illustrating the registration of a user to the system with the creation of the profile for the user and content creation, in accordance with an exemplary embodiment of the present disclosure;
FIG. 7 is a flow diagram illustrating a scenario where a first user is able to view and select sets of questions from the server system, in accordance with an exemplary embodiment of the present disclosure;
FIG. 8 is a flow diagram illustrating a procedure that implements the interaction between the first user and the second user, in accordance with an exemplary embodiment of the present disclosure;
FIG. 9 is a flow diagram illustrating the procedures to implement filtered communication between the first user and the second user after establishment of connection between the two users, in accordance with an exemplary embodiment of the present disclosure;
FIG. 10 is a flow diagram illustrating the procedure for handling the creation or modification of a set of questions, in accordance with an exemplary embodiment of the present disclosure;
FIG. 11 is a flow diagram for illustrating a procedure for creation or modification of a question in a set of question, in accordance with an exemplary embodiment of the present disclosure;
FIG. 12 is a flow diagram illustrating a procedure for the creation or modification of an answer for a question that is created in a set of questions, in accordance with an exemplary embodiment of the present disclosure;
FIG. 13 is a flow diagram of an operation illustrating an algorithm for checking the appropriateness of the answers and answer rates, in accordance with an exemplary embodiment of the present disclosure;
FIG. 14 is a flow diagram illustrating the algorithm that enables prolonging the duration or abbreviation of a location tagged content by the likes or dislikes it receives by the users, in accordance with an exemplary embodiment of the present disclosure;
FIG. 15 is a flow diagram illustrating an algorithm that enables the computation of the outcome of a submitted answered set of questions, in accordance with an exemplary embodiment of the present disclosure;
FIG. 16 illustrates a block diagram representation of a server capable of implementing at least some embodiments of the present disclosure;
FIG. 17 illustrates a user interface that enables a user to login or sign up, in accordance with an exemplary embodiment of the present disclosure;
FIG. 18A illustrates a user interface for depicting availability of sets of questions and location tagged content in a specific location, in accordance with an exemplary embodiment of the present disclosure;
FIG. 18B illustrates a user interface depicting a list tile of the set of questions, in accordance with an exemplary embodiment of the present disclosure;
FIG. 18C illustrates a user interface depicting a list tile of a location tagged set of questions, in accordance with an exemplary embodiment of the present disclosure;
FIG. 18D illustrates a user interface depicting a list tile of a location tagged content in the set of questions, in accordance with an exemplary embodiment of the present disclosure;
FIG. 19 illustrates a user interface depicting the user with questions contained in the set of questions and the answers available for the questions, in accordance with an exemplary embodiment of the present disclosure;
FIG. 20A illustrates a user interface page that is displayed after completing login or sign up process, in accordance with an exemplary embodiment of the present disclosure;
FIG. 20B illustrates a user interface which assists the users in creating a set of questions by depicting the most popular sets of questions and enabling the users to adopt one, in accordance with an exemplary embodiment of the present disclosure;
FIG. 20C illustrates a user interface which assists the users in creating a set of questions by depicting the major categories of the questions available in a database of the system and enabling the users to choose a number of questions of each category that will be randomly chosen by the system to create a new set of questions, in accordance with an exemplary embodiment of the present disclosure;
FIG. 21A illustrates a user interface which assists the users in creating questions for the set of questions, in accordance with an exemplary embodiment of the present disclosure;
FIG. 21B illustrates a user interface depicting questions contained in a category of set of questions, in accordance with an exemplary embodiment of the present disclosure;
FIG. 21C illustrates a user interface which assists the creation of questions by providing possible questions from a database of the system that resemble the text supplied by the user, in accordance with an exemplary embodiment of the present disclosure;
FIG. 22A illustrates a user interface illustrating the set of questions already created, in accordance with an exemplary embodiment of the present disclosure;
FIG. 22B illustrates a user interface depicting information pertaining to the set of questions already created, in accordance with an exemplary embodiment of the present disclosure;
FIG. 23A illustrates a user interface depicting creation of a new set of questions, in accordance with an exemplary embodiment of the present disclosure;
FIG. 23B illustrates a user interface depicting modification of a new set of questions, in accordance with an exemplary embodiment of the present disclosure;
FIG. 23C illustrates a user interface depicting creation or modification of answers to the set of questions, in accordance with an exemplary embodiment of the present disclosure;
FIG. 24A illustrates a user interface depicting establishment of connection between users, in accordance with an exemplary embodiment of the present disclosure;
FIG. 24B illustrates a user interface depicting message exchanging board wherein the connected users are exchanging messages with each other, in accordance with an exemplary embodiment of the present disclosure;
FIG. 24C illustrates a user interface depicting a voice-call function of the system between the connected users, in accordance with an exemplary embodiment of the present disclosure; and
FIG. 24D illustrates a user interface depicting a map wherein the connected users have shared location with each other, in accordance with an exemplary embodiment to the present disclosure.

The drawings referred to in this description are not to be understood as being drawn to scale except if specifically noted, and such drawings are only exemplary in nature.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details.

Reference in this specification to "one embodiment" or "an embodiment" means that a particular feature, structure, or characteristic described in connection with the embodiment is included in at least one embodiment of the present disclosure. The appearance of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

### OVERVIEW

Various embodiments of the present disclosure provide computer-implemented methods and systems for establishing connections between users via a structured communication. Without loss of generality, herein, the structured communication for establishing a connection for a user with another user is achieved by presenting a set of questions to another user before accepting a connection request from another user, matching a received response for the set of questions against the desired response, and based on the comparison allowing the establishment of the connection. The set of questions can be considered as a formulated unit of communication, and if the response of another user is in line with the expected response with reasonable expectations, connection can be established; and such establishment of connection can be considered to be built over the structured type of communication defined by questions and receipt of desired responses to the questions. Such a structured type of communication saves the participants from the unproductive and sometimes chaotic outcome of unprepared and unstructured communication. In addition to that, it helps them prepare the content they wish to create, formulating it into questions and answers prior to the act of communicating and in their own time, which helps provide accurate and well-defined points of interest and inquiry. Moreover, the users can create sets of questions on the spot to express their current feelings, interests and inquiry needs.

To achieve the structured communication for establishing a connection between two users, in at least one embodiment of the present disclosure, a method includes facilitating a first set of questions to a first user by a processor of a server system, upon receiving a connection request from the first user. The method receives a response for each of the first set of questions from the first user. The response for each of the first set of questions is evaluated for generating a first evaluation input. The first evaluation input may either be a manual input from a second user associated with the first set of questions or an automatic input based on analysis of the response. The first evaluation input is configured to determine relevancy of the response for each of the first set of questions, with the second user. A connection is established between the first user and the second user based at least in part on the first evaluation input. On establishing the connection, the method enables access to profile information of the first user and the second user amongst each other. The method also provides versatility to the first user for interaction with the second user by a chat-based interaction, a voice-based interaction, and the like.

In at least one embodiment, the method also provides a second set of questions to the second user from the first user, when the first user is either responding to the first set of questions or upon establishing the connection with the second user. The method thereafter receives a reply from the second user for each of the second set of questions. The reply is evaluated by the first user for generating a second evaluation input. Based on the second evaluation input, the system may be configured to decide to retain the connection established between the first user and the second user. Thus, the method incorporates a to and from question-answer interactions between the first user and the second user in the process of establishing a connection, while also ascertaining compatibility between the users. The method, therefore, ensures that the connections are established based on the personality of the users, rather than superficial understanding between users by merely browsing their profile information.

The present disclosure also discloses a server system including processing capabilities for implementing the aforesaid method for creating structured communication between users. Although process steps, method steps or the like in the disclosure may be described in sequential order, such processes and methods may be configured to work in alternate orders. In other words, any sequence or order of steps that may be described in this patent application does not, in and of itself, indicate a requirement that the steps be performed in that order. The steps of described processes may be performed in any order practical. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the invention(s), and does not imply that the illustrated process is preferred.

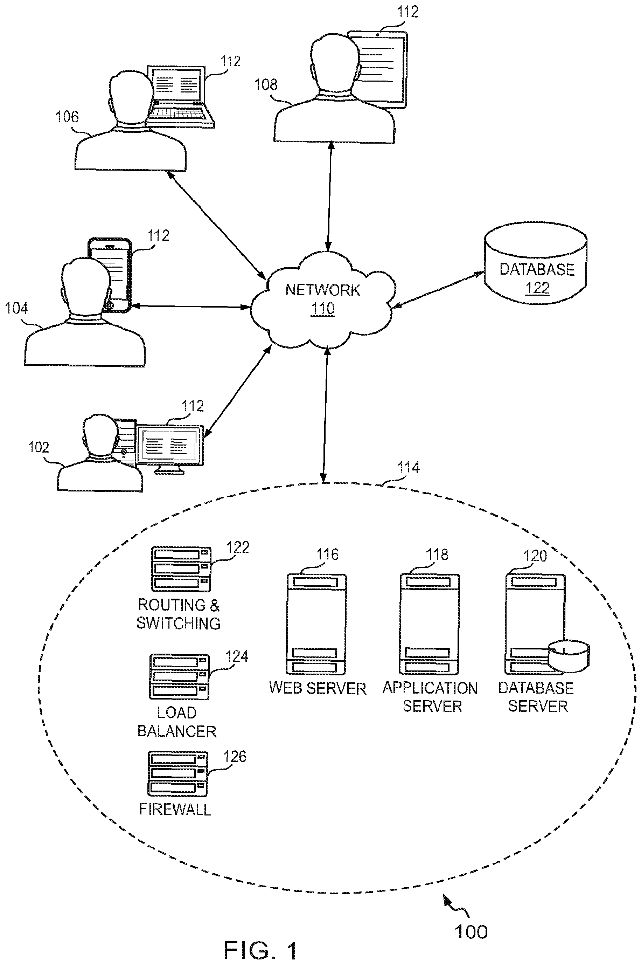

Various embodiments with respect to methods and systems for creating structure communication between users through an exchange of questions are described in FIG. 1 to FIGs. 24A-24D.

FIG. 1 shows an example representation of an environment 100 related to at least some example embodiments of the present disclosure. The environment 100 includes users 102, 104, 106 and 108 connected via a network 110. The network 110 may be implemented as a wired network and / or wireless network such as local area network (LAN), wide area network (WAN), virtual network, cellular network, wireless LAN, a peer to peer network, etc. In some embodiments, the network 110 can be, for example, internet. The users may communicate between them via the network 110 using a client device 112. The client device 112 may include devices such as laptops, tablets, desktops, smartphones, wearable devices, workstation terminals or other computing devices with network interfaces such as micro-PCs, smart watches etc. The environment 100 also includes a server system 114 configured to host and execute a portion of the system for the creation of a structured communication process. The server system 114 further includes server devices such as one or more web servers 116, one or more application servers 118 and one or more database servers 120. Only one type of client device 112, and different servers within the server system 114 are shown for the sake of simplicity and explanation purposes, and there may be many such components without departing from the scope and spirit of the disclosure.

Each of the server devices 116, 118 and 120 includes a processor and a memory. The memory may be, for example, a random-access memory (RAM) (e.g., a dynamic RAM, a static RAM), a memory buffer, a hard drive, an erasable programmable read-only memory (EPROM), an electrically erasable read-only memory (EEPROM), a read-only memory (ROM), etc. In some embodiments, the memory may store data associated with providing the creation of a structured communication process leading to filtered connections between users through the exchange of sets of questions. Such data may include, for example, stored questions, answers, sets of questions, plain location tagged content, user profile information (e.g., username, password, established connections of users, stored sets of questions of user, ratings of users' questions or sets of questions etc.), history information related to attempts to create interactions and failed interactions, reported and banned sets of questions and/or the like. In such embodiments, the server devices 116, 118, 120 may be configured to add, remove and/or update the data stored in the server devices 116, 118, 120. Furthermore, the server devices 116, 118, 120 may be configured to process data (e.g., by the processor) and/or generate previews (e.g., stored in the memory) associated with providing the creation of a structured communication process leading to filtered connections between users through the exchange of sets of questions. In some embodiments, the memory may store instructions to cause the processor to execute modules, processes and/or functions associated with providing the creation of a structured communication process leading to filtered connections between users through the exchange of sets of questions.

The environment 100 further includes a database 122 associated with the users 102-108 and is configured to store interaction between users 102-108. The database 122 may be maintained by a third-party for storing information pertaining to the interactions between the users 102-108. Alternatively, or additionally, the database 122 may be embodied with the server 114.

Further, the environment 100 also includes a routing and switching unit 122 and one or more load balancers 124 to appropriately route internet traffic to the appropriate hardware (such as servers). Further, the environment 100 can optionally incorporate one or more computer firewalls 126 to ensure that only permitted traffic is allowed to components of the servers 114.

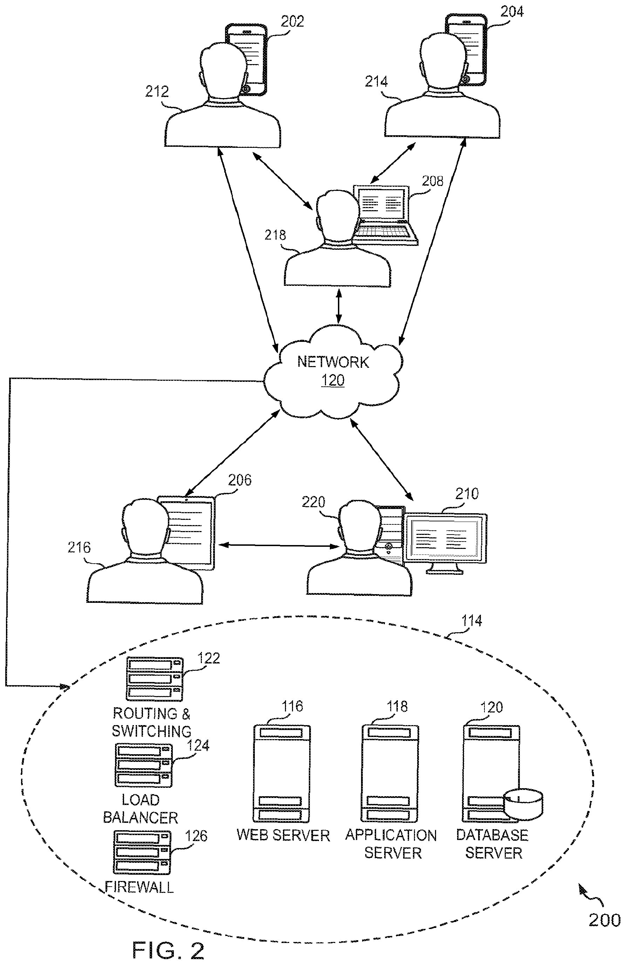

FIG. 2 shows an example representation of an environment 200 related to at least some additional embodiments of the present disclosure. The environment 200 exemplarily illustrates an overall system for the creation of a structured communication process between users according to some embodiments. In this illustrated representation, the system for the creation of a structured communication process includes two partial embodiments, a client-server one and a peer to peer one, functioning together executing appropriate tasks and procedures. The client devices 202, 204, 206, 208, 210 are shown as associated with users 212, 214, 216, 218 and 220, respectively.

The client-server partial embodiment includes client devices 202, 204, 206, 208, 210 and may include one or more server devices of the server 114 such as one or more web servers 116, one or more application servers 118 and one or more database servers 120, as discussed in the description of FIG. 1. The client devices 202, 204, 206, 208, 210 are in communication with the server devices 116, 118, 120 via the network 120. These server devices 116, 118, 120 may handle only a part of the interactions between the users, while the other part may be handled by an on the spot peer to peer network created between the devices 202, 204, 206, 208, 210, acting now both as client and server devices or implementing other types of peer to peer networks, and especially between devices that are in proximity. In the illustrated example, users 212, 214, 218 are in proximity and a peer to peer network has been created between their devices 202, 204, 208, as is also true for users 216 and 220 and their devices 206, 210. These peer to peer networks may have been created using Bluetooth technology, or another wireless technology like Wi-Fi Direct or analogous technologies in other platforms.

In the example illustrated, the devices 202, 204, 208 have formed a peer to peer network while still communicating with the system's central servers 116-120 through the network 120 which is also true for devices 206, 210. The part of the interactions that may be handled centrally in a client-server partial embodiment indicated by the relation of the clients with the aforementioned servers may be the storage, the transmission and the reception when requested of the users' profile data, of the public questions, answers and sets of questions, of the sets of questions stored by each user or of the connections established between users or other data of the interactions between them, the reception of the answered sets of questions by the respondents, the calculation of the outcome of the interaction between two participants or the notification of the participants of the interaction about its outcome. The part of the interactions that may be handled in a peer to peer partial embodiment indicated by the relation between the devices 202, 204, 208 in one peer to peer network, and 206, 210 in another, may be the retrieval of users in proximity, the establishment of channels of communication between them, the exchange of sets of questions of each user, the exchange of chat messages or the voice call handling between connected users. This way the two partial embodiments, the client-server and the peer to peer, may function together as a whole completing one another and constituting the full system for the creation of a structured communication process between users.

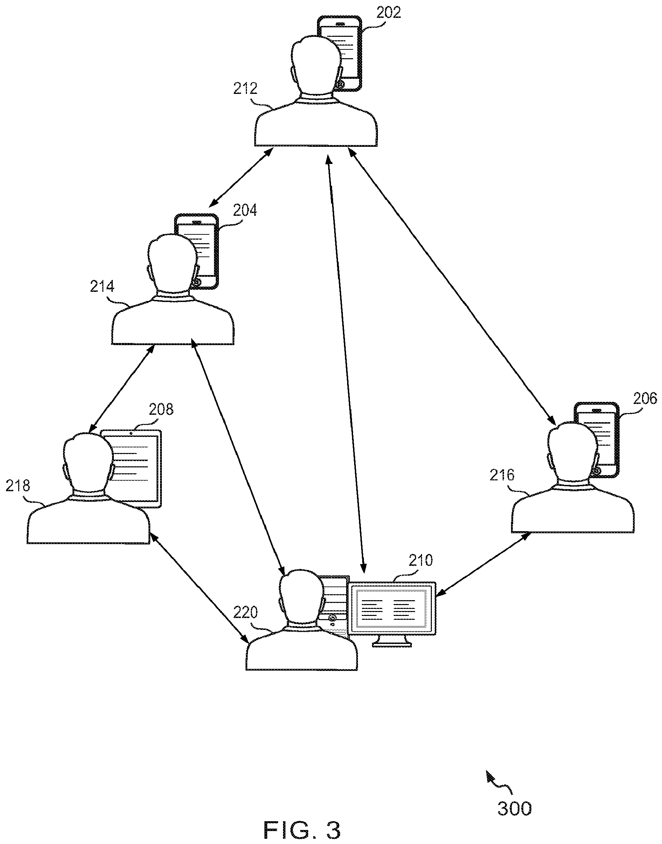

FIG. 3 shows an example representation of an environment 300 related to at least some additional embodiments of the present disclosure. The environment 300 exemplarily illustrates an overall system for the creation of a structured communication process between users according to some embodiments. In this illustrated representation, the system for the creation of a structured communication process includes a peer to peer embodiment. The client devices 202, 204, 206, 208, 210 are shown as associated with users 212, 214, 216, 218 and 220, respectively for the creation of a structured communication process based on a peer to peer implementation. In such an implementation, devices 202, 204, 206, 208, 210 may function both as clients and servers exchanging roles and sharing resources between them. Each of these devices 202, 204, 206, 208, 210 include memory and processors to function as either client device and/or server device. For instance, the devices 202, 204, 206, 208, 210 are capable of processing data associated with providing the creation of a structured communication process between users via the exchange of sets of questions. In the illustrated example, the device 202 has formed peer to peer network communication with the devices 204, 206 and 208. Similarly, other devices have formed peer to peer communication with other devices in proximity. These peer to peer networks may have been created using Bluetooth® technology, or another wireless technology like Wi-Fi Direct or analogous technologies in other platforms. In this embodiment, all interactions may be handled in this peer to peer communication pattern, where devices may interchange roles as server and client or there may be no clear distinction between these two roles as the system functions. This system may consist of processes taking place between participant devices in an appropriate way such as the retrieval of users in proximity, the establishment of channels of communication between them, the exchange of sets of questions of each user, the exchange of chat messages or the voice call handling between connected users, the storage and the transmission when requested of the users' profile data, of the public questions, answers and sets of questions, of the sets of questions stored by each user or of the connections established between users or other data of the interactions between them, the reception of the answered sets of questions by the respondents, the calculation of the outcome of the interaction between two participants, the notification of the participants of the interaction about its outcome.

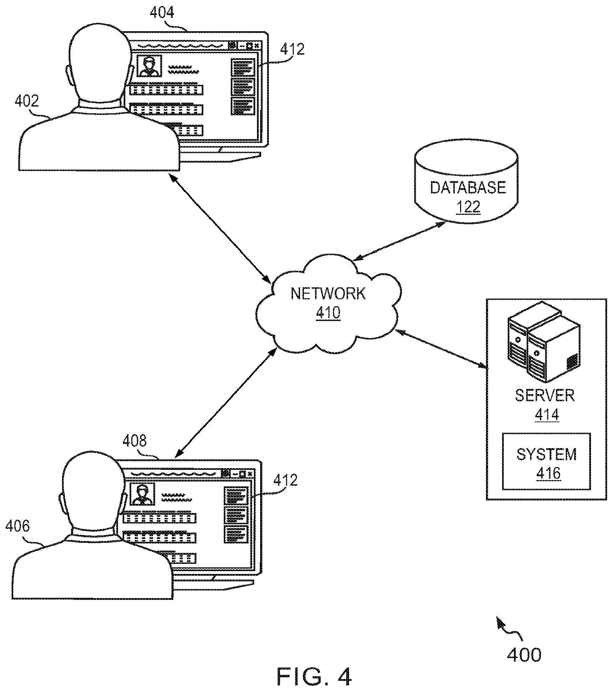

FIG. 4 shows an example schematic representation 400 of operations related to at least some example embodiments of the present disclosure. The representation 400 includes a first user 402 who interacts with a second user 406. The first user 402 can interact with the second user 406 via a network 410 using an interaction application 412 (hereinafter referred to as 'application 412') available at devices 404 and 408 of the users 402 and 406, respectively. The devices 404, 408 may be one of laptops, smartphones, desktops, tablets, wearable devices, workstation terminals and the like. The network 410 may be a centralized network or a decentralized network or may include a plurality of sub-networks that may establish a direct communication between the entities or may offer indirect communication between the entities. Examples of the network 410 may be the network 110, 120 shown in FIGs. 1 and 2.

As shown in illustrated representation, a server 414 is configured to establish the connection between the first user 402 and the second user 406 via structured communication. The term 'structured communication' refers to a planned or organized means of establishing a connection between the first user 402 and the second user 406. In the present disclosure, the 'structured communication' is achieved by providing a set of questions to at least one of the first user 402 and the second user 406, so that the personality traits are well known prior to establishment of the connection. The server 414 is configured to facilitate a first set of questions to the first user 402, upon receiving a connection request from the first user 402. The term 'facilitate' in one implementation may refer to the server 414 gathering sets of questions from which, the first user 402 may select the first set of questions, upon receiving the connection request. In another implementation, the term 'facilitate' may refer to the server 414 providing the first set of questions to the first user 402, upon receiving the connection request. The server 414 receives a response for each of the first set of questions from the first user 402. Thereupon, the server 414 receives a first evaluation input generated based on evaluation of the response to each of the first set of questions. The first evaluation input may be a manual input received from the second user 406 associated with the first set of questions and an automatic input based on analyzing the response. The server 414 is configured to establish connection between the first user 402 and the second user 406 based at least in part on the first evaluation input.

In one implementation, the manual input may be a manual evaluation of the response by the second user 406. In other words, a real-time evaluation or selection of relevancy of the response is provided by the second user 406, based on which the first evaluation input is received by the server 414. Therefore, the first evaluation input clarifies, whether the responses provided by the first user 402 is relevant to the answers expected by the second user 406. The server 414 is configured to establish the connection when the first evaluation input is positive, which can be generated when the response of the first user 402 is relevant to the answers expected by the second user 406 or when the frequency of relevant response of the first user 402 is high.

Additionally or alternatively, in another implementation, the automatic input may be the input generated by the system 416 based on comparison of the response of the first user 402 with a first preset response defined by the second user 406. In other words, the system 416 receives the first evaluation input based on the comparison of the response of the first user 402 with the first preset response. In yet another implementation, the system 416 may determine a first rating based on the comparison of the response of the first user 402 with the first preset response, which is explained in subsequent sections of the detailed description. The first rating may be determined by the system 416 based on a score assigned by the second user 406 for each of the relevant response from the first user 402. The system 416 may be configured to receive the first evaluation input for establishing connection between the first user 402 and the second user 406, when the first rating exceeds a predetermined rating set by the second user 406. In other words, the first evaluation input is positive, when the first rating exceeds the predetermined rating set by the second user 406.

The server 414 may also provide a second set of questions to the second user 406, upon receiving instructions from the first user 402. The server 414 provides the second set of questions while the first user 402 is responding to the first set of questions or upon establishing connection between the first user 402 and the second user 406. The server 414 thereupon receives a second evaluation input, generated based on evaluation of the reply received for each of the second set of questions from the second user 406. The second evaluation input may be a non-automatic input received from the first user 402 associated with the second set of questions and an automated input based on analyzing the reply. The server 414 may be configured to maintain the connection between the first user 402 and the second user 406 based at least in part on the second evaluation input.

In one implementation, the non-automatic input may be the manual evaluation of the reply by the first user 402. In other words, a real-time evaluation or selection of relevancy of the reply is provided by the first user 402, based on which the second evaluation input is received by the server 414. Therefore, the second evaluation input clarifies, whether the reply provided by the second user 406 is relevant to the answers expected by the first user 402. The system 416 may be configured to maintain the connection between the first user 402 and the second user 406, when the second evaluation input is positive, which can be generated when the reply of the second user 406 is relevant to the answers expected by the second user 406 or when the frequency of relevant response of the first user 402 is high.

Additionally or alternatively, in another implementation, the automated input may be the input generated by the system 416 based on comparison of the reply of the second user 406 with a second preset response defined by the first user 402. In other words, the system 416 receives the second evaluation input based on the comparison of the response of the first user 402 with the first preset response. In yet another implementation, the system 416 may determine a second rating based on the comparison of the reply of the second user 406 with the second preset response. The second rating may be determined by the system 416 based on a grade assigned by the second user 406 for each of the relevant response from the second user 406. The system 416 may be configured to receive the second evaluation input for maintaining the connection between the first user 402 and the second user 406, when the second rating exceeds a predetermined limit set by the first user 402. In other words, the second evaluation input is positive, when the second rating exceeds the predetermined limit set by the first user 402.

In an embodiment, the server 414 may include a system 416 configured to establish connection between the first user 402 and the second user 406 via structured communication. The system 416 may be embodied within the server 414 or may be a standalone component, associated with the server 414. The system 416 is configured to host and manage an application 412, which is accessible to the devices 404, 408 of the first user 402 and the second user 406. The application 412 may be accessible through a website associated with the server 414, so that the first user 402 and the second user 406 may access the website over the network 410 using Web browser applications installed in the devices 404, 408. In another embodiment, the server 414 is configured to facilitate instances of the application 412 to the devices 404, 408 upon receiving a request for accessing the application 412. The server 414, upon receiving the request, allows instances of the application 412 to be downloaded into the devices 404, 408 for the first user 402 and the second user 406 to access the application 412. In an embodiment, the application 412 may include an Application Programming Interface (API) and other components, which may rest on the server 414. In this scenario, the application 412 can be made available at application stores such as Google play store managed by Google®, Apple app store managed by Apple ®, etc., and are downloadable from the application stores to be accessed on devices 404, 408. In some alternate embodiments, the application 412 may be pre-installed on the devices 404, 408 as per the factory settings.

The environment 400 further includes the database 122 configured to store information pertaining to the questions exchanged between the first user 402 and the second user 406. The questions exchanged between the first user 402 and the second user 406 may be, the first set of questions to the first user 402 and the second set of questions to the second user 406. The information pertaining to the questions stored in the database 412 may also be 'questions based on geographical location of the user (*i.e.* the first user 402 and/or the second user 406)', 'questions based on a time zone of the user' or questions based on one or more genre set by the user' or any other relevant parameter as per requirement. The database 122 is also configured to store the response (*i.e.* the answers received from the first user 402) and the reply (*i.e.* the answers received from the second user 406) received for the questions from the users. The database 122 may be maintained by a third-party for storing information pertaining to the questions and the answers of the users. Alternatively, or additionally, the database 122 may be embodied with the server 414.

The system 416 may include an engine such as an application engine (not shown) for the creation of a structured communication process between users through an exchange of sets of questions. This functionality may be incorporated as computer-readable program code stored on a storage device such as the database 122 and executed by the processing systems present in the system 416 or the server 414. The code used may be any suitable, high- or low-level computing language, such as Java, C, C++, C#, .NET, Go, Dart, Swift, Python, PHP, Ruby etc. and could be coded using any suitable, high- or low-level computing language, such as Java, C, C++, C#, .NET, Go, Dart, Swift, Python, PHP, Ruby etc.

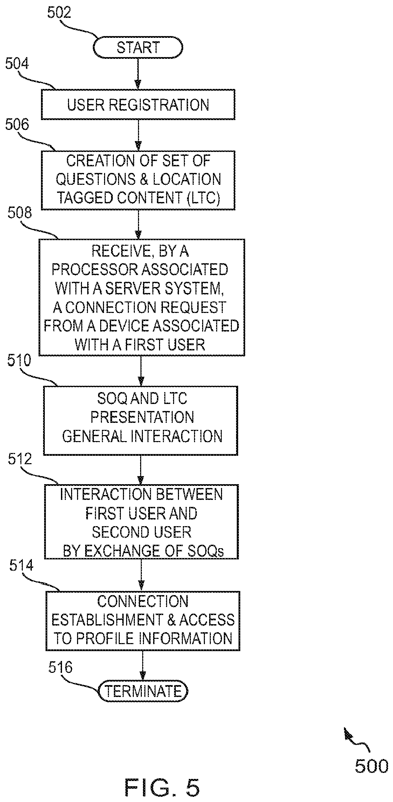

FIG. 5 is a flow diagram 500 depicting the overall method for establishing structured communication between users, in accordance with an exemplary embodiment of the present disclosure. The system starts at 502 where a processor enables a user (for example the user 102) to start the system (*e.g.,* system 416) for establishing structured communication between users. The user may then register to the system 416 through the user registration step 504. As the user is registered with the system 416, the user may then proceed to step 506 to create content, that is sets of questions (SOQ), or adopt already existing content from the database 122. Further, the user may also optionally add a location tagged content (LTC) along with SOQ for setting up communication based on location.

As the SOQ and LTC are created, the user may proceed to step 508, wherein the user sends a connection request to the server 414. For instance, a user "John" sends a request to a processor associated with the server (such as server 414). Upon sending the request to the processor, "John" is provided access to the set of questions stored in the database 122 of the server 414, at step 510. The set of questions may be the first set of questions prepared or set by another user say, 'Peter'. Then set of questions may be provided along with the location details of "Peter". At step 512, "John" and "Peter" interact with each other through an exchange of questions. At step 514, if the interaction between "John" and "Peter" results in a positive outcome, a connection may be established between "John" and "Peter". The establishment of connection between "John" and "Peter" provides each other, access to the other user's profile information and other features that may intensify the communication between "John" and "Peter". The users may repeatedly use the above-mentioned procedures of the system, with other users or may terminate the process, as shown in step 516.

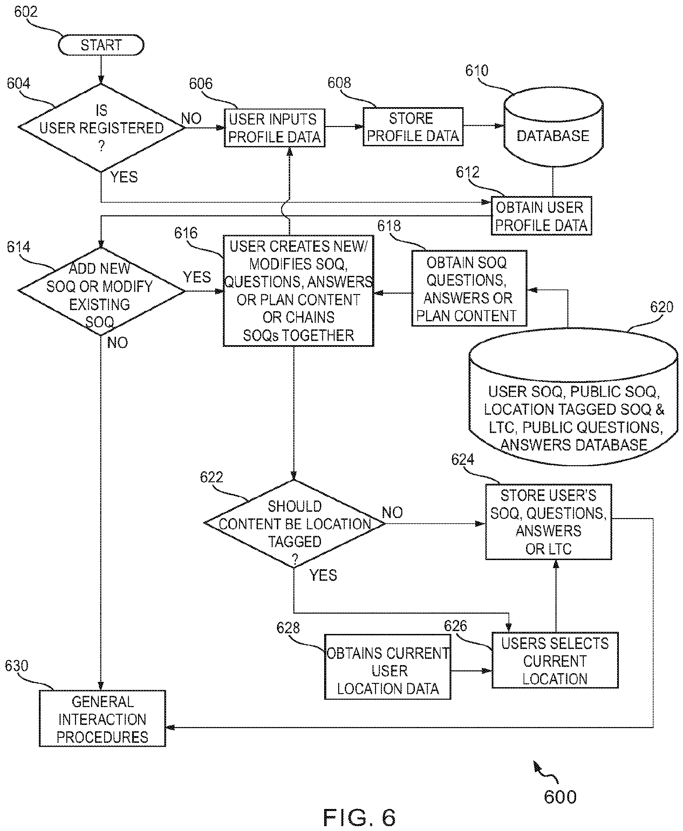

FIG. 6 is a flow diagram 600 illustrating the registration of a user to the system 416 with the creation of the profile for the user and content creation, in accordance with an exemplary embodiment of the present disclosure. The user starts the process of registering with the system 416 at step 602. The system 416 at step 604, checks if the user is already registered with the application 412 managed by the system 416 or is a new user. If the user is a new user, the system 416 through the application 412 enables the user to input profile data at step 606. The profile data may include, but not limited to, user's preferred username, password, email, age, etc. At step 608, the system 416 may store user's profile data in an appropriate database 610 (i.e., an example of the database 122). The system 416 may also store the profile data in another data storing system that pertains to the user's device, in case of a peer to peer / partially peer to peer network.

After storing the profile data of the new user, the system 416 proceeds to step 616, where the user may create a new set of questions or location tagged content or can modify existing public sets of questions which are retrieved at step 618 from an appropriate database 620 or other data storing system pertaining to the user's device and may make them the user's set of questions. This modification may be executed by adding more questions, removing questions, editing the questions, adding, editing or removing the answers of each question, changing the sequence in which the questions appear in the set of questions or the sequence in which the answers of each question may appear in the respective list of each question. Users may even chain sets of questions together, so that modular sets of questions may occur and the final set of questions that the second user 406 will face from the first user 402 may be created by the outcome of the second user's 406 own answers. Users may also adopt public sets of questions and adapt them to their needs and inquiries.

In cases where the user is already a registered user, the system 416 performs step 612, where the user's profile data may be obtained from the appropriate database or other data storing system pertaining to the user's device and the system performs 416 step 614. At step 614, the user is provided with an option to add a new set of questions or modify existing sets of questions already stored in the appropriate database or other data storing system pertaining to the user's device or modify one's own set of questions. If the user intends to add a new set of questions or modify the existing set of questions, the step 616 is performed.

At step 622, users may be asked if the set of questions created is to be tagged to a location. At step 622, if the user selects that the set of questions should not be location tagged, then the set of questions may be immediately stored in the appropriate database (e.g., database 620) or other data storing system pertaining to the user's device as shown in step 624.

At step 622, if the user selects yes, then the system 416 performs step 626. At step 626, the system 416 selects a current location of the user either automatically or as provided by the user as shown in step 628. For instance, the user may either select the location desired using a map, coordinates, or address, or let the system obtain the current location of the device and the user, as shown in step 626. The location tagged set of questions or the location tagged content may then be stored (step 624) in the appropriate database 620 or other data storing system pertaining to the user's device. In some example embodiments, if the user has created a plain content, it can be mandatorily tagged to a specific location.

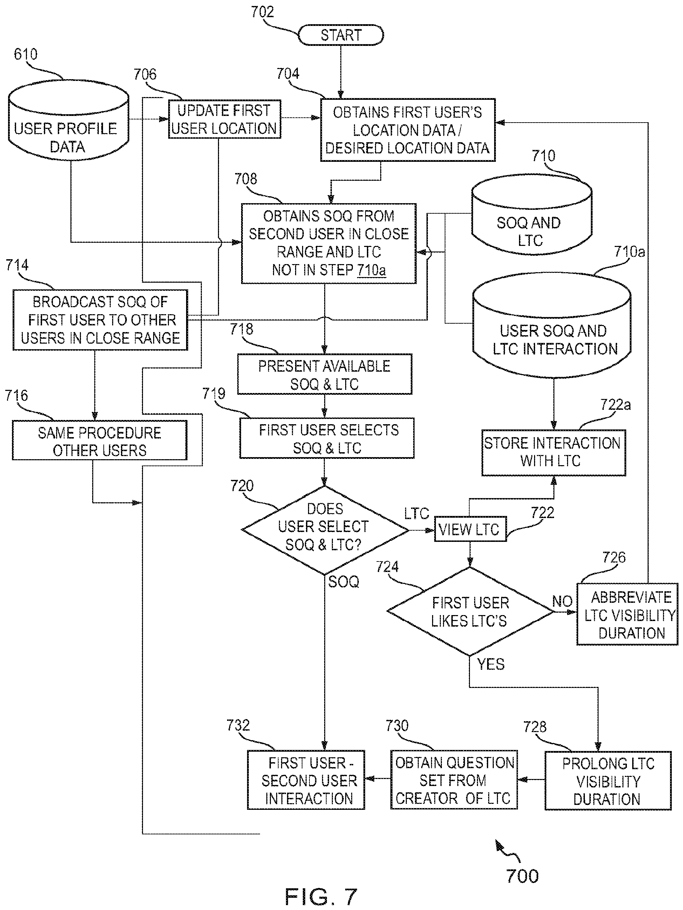

After storing the sets of questions or the location tagged content, the system proceeds to step 630 for general interaction procedures between users. The system 416 also directs to step 630, if at step 614 the already registered user decides that no addition or modification of sets of questions is necessary at that particular time. The general interaction procedure is explained with reference to FIG. 7.

FIG. 7 is a flow diagram 700 illustrating a scenario where the first user 402 is able to view and select sets of questions from all the other users in close proximity with the first user 402 or sets of questions of all the other users tagged to the same location of the first user 402, in accordance with an exemplary embodiment of the present disclosure. As shown in flow diagram 700, the first user (e.g., a registered user) starts using the system 416 at step 702. At step 704, the system 416 obtains the location (or the desired location) of the first user 402 by using the device's appropriate interface. At step 706, the system 416 may update the first user's location data with the new location, which may be stored in the database 610 that keeps and handles profile data for all users associated with the system 416.

At step 708, the system 416 may retrieve from the appropriate database or other data storing system 710 (e.g., database 620), a set of questions, randomly or in another way selected or set by other users. The system 416 may be configured to exclude the sets of questions that the first user has already interacted with, by retrieving the respective data in the database 710a or other data storing system where the relations between users and interactions with sets of questions or location tagged content are stored. Instead of retrieving set of questions, the system 416 may also retrieve location tagged content created by other user that may or may not be in proximity, tagged with the first user's 402 location. In cases where the system 416 is implemented in a peer to peer network embodiment (e.g., embodiment of FIG. 3) or a partly peer to peer network embodiment (e.g., embodiment of FIG. 2), the users in proximity would be the ones already consisting the peer to peer network and the sets of questions of these users may be retrieved from the data storing systems on their devices. In step 718, the available sets of questions (and the content tagged with the first user's 402 current location, in an embodiment that provides location tagged content) may be displayed on a screen of the device of the first user 402. As the sets of questions /LTCs are displayed, as shown at step 719, the first user 402 may be presented with an option to choose one tile at step 720, wherein the tile may be the set of questions / LTC.

If the tile selected by the first user 402 at step 720 is a location tagged content, the first user 402 may be able to view it to its full length in step 722 and the interaction will be stored in the respective database or another storing system as shown in step 722a. At step 724, the system 416 provides an option to the first user 402 to express an opinion about that location tagged content. If the user's opinion for the location tagged content is negative, then the system 416, at step 726, may invoke an algorithm that may abbreviate the duration of visibility of that location tagged content to other users. The first user 402 may then be led to step 704, to obtain the current location again, as it may have changed, and present the user again with a new list of sets of questions of proximal users or location tagged content tagged with one's current location. In case the first user 402 evaluates positively the location tagged content at step 724, the system 416 may invoke an algorithm to prolong the duration of its visibility to other users as shown in 728. Further, the first user may obtain 402 (step 730) a set of questions created by the creator of the location tagged content (such as a second user 406) and the first user 402 may be led to step 732 where interaction between the first user 402 and the second user 406 takes place.

If the tile selected at step 720 is a set of questions instead of LTC, the first user 402 may be directly led to step 732, where interaction between the first user 402 and the second user 406 takes place. Further, as shown at step 714, after updating the first user profile data with the current location of the first user, the new location of the first user may be broadcast when other users are at step 708, so that first user's sets of questions may be available to other users in proximity. It should be noted that as it is shown in step 716, the whole procedure described at steps 704-732 may be repeated for all users in proximity and all proximal users may be able to interact in the role of respondents with this first user.

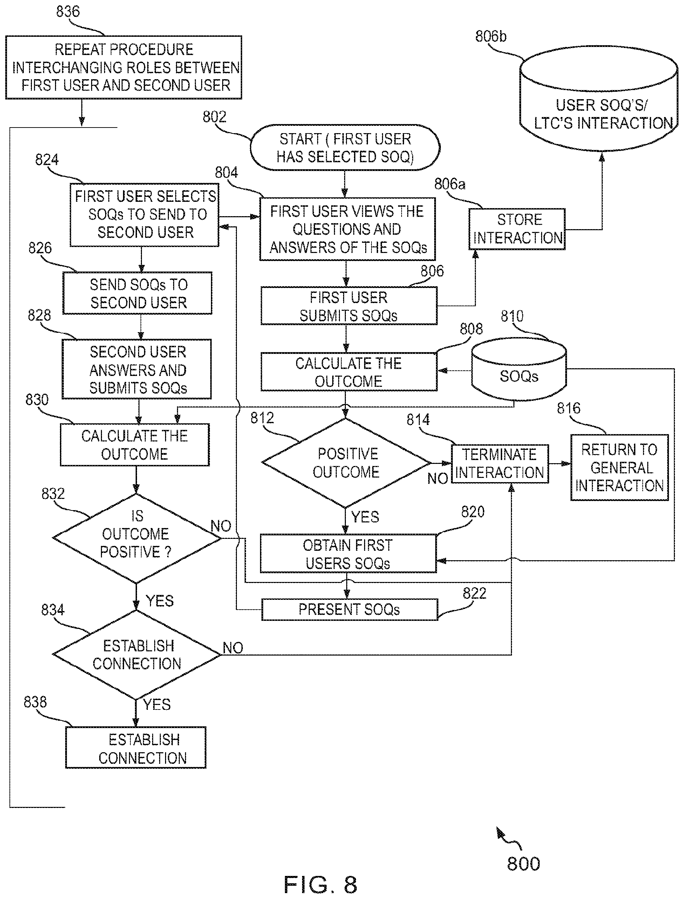

FIG. 8 is a flow diagram 800 illustrating a procedure that implements the interaction between the first user 402 and the second user 406, in accordance with an exemplary embodiment of the present disclosure. The system 416 enables interaction between the first user 402 and second user 406 by starting at step 802, where the first user 402 has selected the SOQ. At step 804, the set of questions is on the screen of the first user's device and the first user 402 may view the set of questions (*i.e.* the first set of questions) and answer them. At step 806, the first user 402 may submit the answers of the set of questions, and at step 806a, the interaction may be stored in a database 806b or other data storing system where the relations between users and interactions with sets of questions or location tagged content is stored.

At step 808, the system 416 calculates the outcome of this first iteration of the interaction of the first user 402 with the second user 402. The system 416 calculates the outcome (*i.e.* the first evaluation input) by fetching information from the appropriate database 810, where the sets of questions of users, questions, answers and other attributes of these sets of questions are stored. More specifically, the system 416 obtains, from the database 810, the answer rates that the second user 406 may have set for each answer of each question of that particular set of questions and the minimum outcome rate for this set of questions, and a minimum rating the first user 402 should get for connection establishment. Based on the above information obtained from the database 810 and the actual answers the first user 402 may have given, the system 416 may calculate the outcome of this first iteration of the interaction. In cases where the system 416 is implemented in a peer to peer network embodiment, as described or a partly peer to peer network embodiment, the answered set of questions may be sent back from the first user's device to the second user's device, in the data storing system of which the answer rates and the minimum outcome rate may be stored. In such embodiments, in the second user's device, the outcome of this first iteration of interaction may be calculated.

At step 812, the system 416 checks if the outcome is negative or positive. If the outcome is negative, then the interaction may be terminated at step 814 and the user may be led to the interface of the sets of questions of proximal users and location tagged content that may be produced by the general interaction procedures as shown in step 816 (an example of step 630, see FIG. 6).

If the outcome is positive at step 812, then the system 416 may obtain at step 820, the sets of questions created by the first user 402 from the appropriate database or data storing system 810 and the first user 402 may be presented with the first user's own sets of questions (*i.e.* the second set of questions) at step 822. At step 824, the first user 402 may select which of these sets of questions should be sent to the original question setter *i.e.* the second user 406 to answer, so that a first expression of reciprocity may be established and a connection between the first and second users may be possible.

At step 826, the system 416 may send the selected set of questions to the second user 406. At step 828, the second user 406 may view, answer and submit the set of questions received from the first user 402. At step 830, the system 416 calculates the outcome of the answers submitted by the second user 406. At step 832, if the outcome is negative, then the interaction between the users is terminated. In an example embodiment, the first user 402 may select to give a second chance to the second user 406 for establishing the connection between the two users. However, if the outcome is positive, at step 834, the second user 406 may either terminate the interaction between the two users (as the second user may disapprove of the set of questions received from the first user) or the second user may approve the establishment of the connection at step 838, between the first user 402 and the second user 406. Further, in another embodiment, the second user 406 may choose to send another set of questions to the first user 402, so that the reciprocity between the two users may be further validated. At step 836, the steps 824 to 834 may be repeated with the roles of first user 402 and second user 406 reversed.

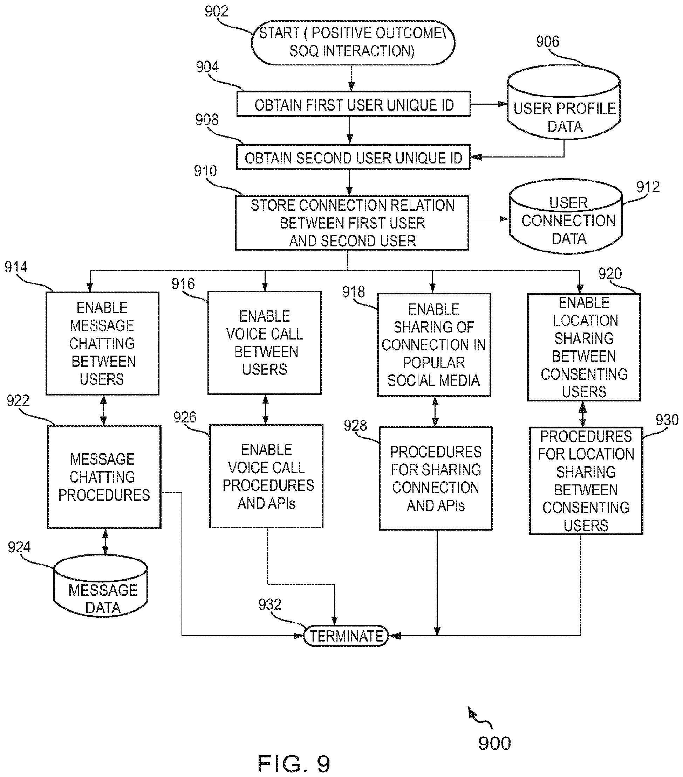

FIG. 9 is a flow diagram 900 illustrating the procedures to implement filtered communication between the first user 402 and the second user 406 after establishment of connection between the two users, in accordance with an exemplary embodiment of the present disclosure. The system 416 starts at step 902, when there is a positive outcome on the interaction between the first and second users 402, 406. When there is a positive outcome, at step 904, the system 416 may obtain the first user's unique ID and in step 908, the second user's unique ID from the user profile data database 906 (e.g., database 610) or from other data storing system. At step 910, the system 416 may store a connection relation between the first and second user 402, 406 in the appropriate database 912 using the mentioned unique IDs. In case of the system 416 being implemented as a peer to peer network or as a partly peer to peer network embodiment, the connection relation may be stored in the data storing systems of the devices of the first and second users. After storing the relation, the system 416 may give the connected participants, an opportunity to make use of its post-connecting features that may, among others, provide a way for communication by means of message chatting as shown in step 914, which may invoke the respective message chatting procedures 922. Further, the system 416 may store respective chatting data in the appropriate database 924 or other data storing system. The system 416 may further provide voice call communication between the two users at step 916, which may invoke the respective voice call procedures 926 and may put the respective Application Programming Interface (API) to use. The system 416 may also enable, at step 918, communication between users in popular social networks, which may invoke the respective procedures for sharing connection and may put the respective API to use at step 928. The system 416 may further enable connected users to share their real-time location data at step 920, which may invoke the appropriate methods and procedures that provide consenting users with this possibility at step 930. The system 416 may constantly provide access to the above features to connected users and the described procedure may terminate at step 932.

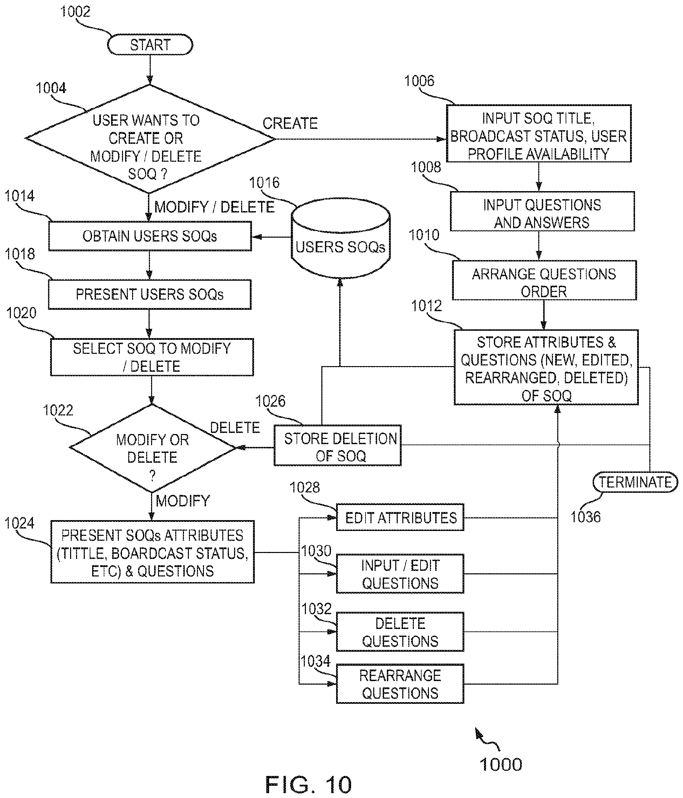

FIG. 10 is a flow diagram 1000 illustrating the procedure for handling the creation or modification of a set of questions, in accordance with an exemplary embodiment of the present disclosure. The procedure for the creation or modification of sets of questions starts at step 1002, in one or more scenarios. For example, when a new user may join the system 416 and may not have any sets of questions created or when a user may wish to create more sets of questions or modify existing sets of questions, there is a need to create or modify the sets of questions.

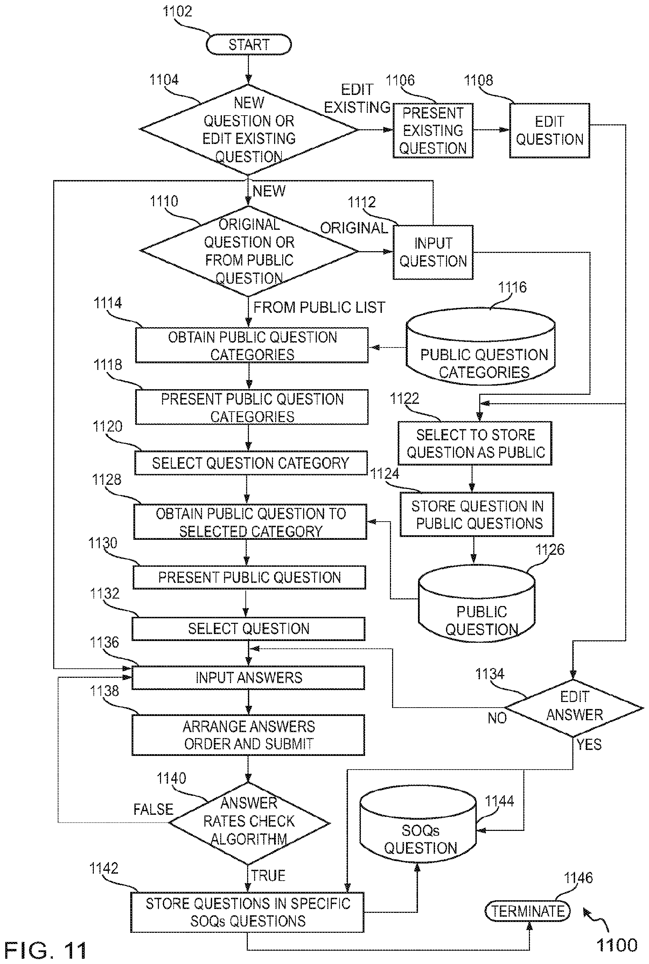

At 1004, the system 416 provides an option to the user to make a selection whether the user intends to create a new set of questions or to modify / delete an existing set of questions. If the user selects to create a new set of questions, the system 416 may ask the user to complete data attributes that pertain to a set of questions. Some non-exhaustive examples of the attributes include the title of the set of questions, the broadcast status (whether the set of questions may be broadcast publicly or remain undisclosed), the availability of the profile of the second user 406 once the first user 402 has interacted with the set of questions with a positive outcome etc., as shown in step 1006. At step 1008, the user may input questions and also include the creation of answers for each question. The procedure of creation of answers is described with reference to FIG. 11. At step 1010, the user may arrange the questions the way he desires and afterwards the system 416 may store at step 1012, the set of questions in the respective database 1016 that contains data for each set of questions and the procedure may terminate at step 1036.

In scenarios where at step 1004, the user selects to modify or delete existing sets of questions, the system at step 1014, may obtain the sets of questions created by that user and store the sets of questions in the respective database 1016. Further, the system 416 presents these sets of questions to the user at step 1018. At step 1020, the user may select which set of questions to modify or delete. At step 1022, if the user selects to delete the set of questions, the system 416 may store the deletion of the SOQ at step 1026 in the respective database 1016 of users' sets of questions and the procedure may terminate 1036. At step 1022, if the user selects to modify the set of questions, at step 1024, the system 416 may present the particular attributes' data of the set of questions (like the ones input in step 1006) and may present the user with the possibility to edit these attributes at step 1028, to add more questions at step 1030, to delete existing questions from the set of questions at step 1032 or to rearrange the existing questions at step 1034. These modifications may be stored at step 1012, in the respective database 1016 that contains data for each set of questions and afterwards, the procedure may terminate at step 1036.

FIG. 11 is a flowchart illustrating another procedure for the creation or modification of a question in a set of questions. This procedure is initiated at step 1102 when a user chooses to add a new question in a set of questions (for *e.g.* as shown in FIG. 10) or chooses to modify an existing question and may be repeated until the user has created the desired number of questions. In step 1104 the user may select to create a new question or edit an existing question.

If the user selects to edit an existing question, the user may already have chosen that particular question for *e.g.* in FIG. 10 and that question will be presented at step 1106 in an editable form for the user to edit it at step 1108. Subsequently, the user may be asked to select if the question may be stored in the respective database where the public questions are stored at step 1122. At step 1124, the question is stored in the respective database, if the questions are required to be stored. If the user wishes that the question contain possible answers, should the user wish not to modify the answers (*i.e.* step 1134 for editing answers) already set for the edited question, the edited question may be stored as per the step 1142, in the database where the questions of the particular set of questions are stored. At step 1136, the user can modify the answers already set for the edited question, which is described in detail in subsequent sections of the detailed description. This sub-procedure may be repeated as many times as the user may consider necessary to obtain the desired number of answers for that question.

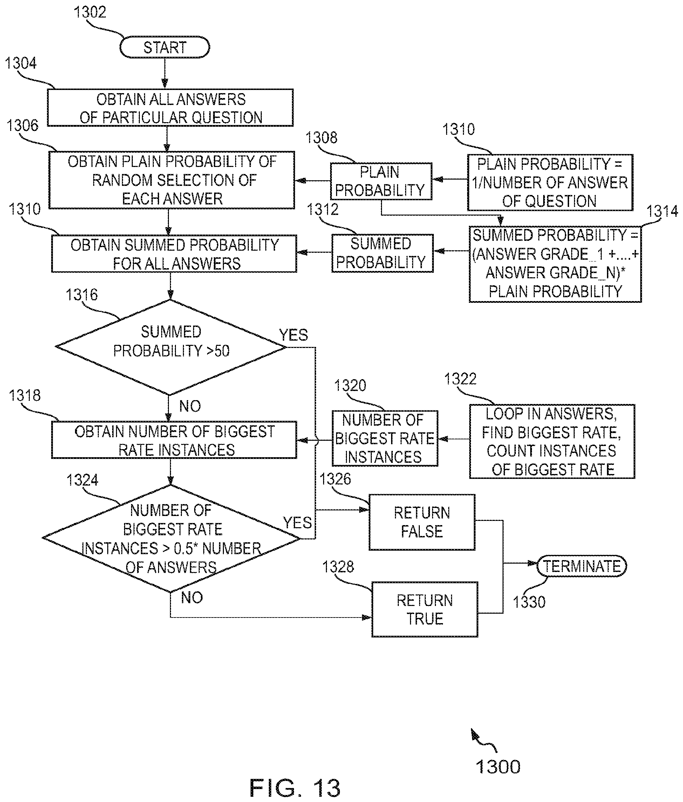

At step 1138, the user may arrange the answers in the appropriate order and submit the question with the respective answers. If the user wishes that the answers be assigned with rates of appropriateness, the user is directed to step 1140 for checking the appropriateness of the answers and answer rates, using an algorithm explained in subsequent sections (FIG. 13). The algorithm is configured to be positive or true if the answers and answer rates are appropriate and false if they are not. If the algorithm returns false, the user may be led back to the sub-procedure of creating - modifying the answers of this question (*i.e.* step 1136) to make the appropriate changes to the answers and answer rates appropriately and for the algorithm to be positive. If the algorithm returns true, the system may store the question along with the new - modified answers as per the step 1142, in the respective database where the questions and answers of the specific set of questions are stored (*i.e.* step 1144). Subsequently the procedure may terminate at step 1146.

If the user selects to create a new question in step 1104, then the user may be led to select step 1110 whether this new question may have an original content or the user may draw its content from the database where questions created by other users and made public are stored. When the user selects to input original content, then the user is led to input that content in step 1112. Subsequently, the user is led to steps 1122, 1124 and 1126 so that the system 416 may store this new question to the database where public questions are stored, if the user desires so, as described previously. The user is also led to step 1136 to input answers for this new question and the procedure will continue as described above. After completing the above described tasks, the procedure may terminate at step 1146.

Further, if the user wishes to draw the content of the question from the public questions already stored by other users in the respective database by selecting the step 1110, then the system 416 may first obtain (*i.e.* step 1114) the categories and subcategories under which these public questions are categorized from the respective database where the categories and subcategories of the public questions may be stored (step 1116) and then (step 1118) may present these categories and subcategories to the user. At step 1120 the user may select a category or subcategory and then the system 416 may obtain the public questions (step 1128) that are related to this particular category or subcategory from the respective database (step 1126). Subsequently, the system 416 may present these questions to the user at step 1130 and the user may select a question that fits the content criteria that this user may have set for this question at step 1132. If the user wishes that the question contains possible answers, since this question is new and will not contain answers, the user may be led to steps as described above. After completing the above described tasks, the procedure may terminate at the step 1146.

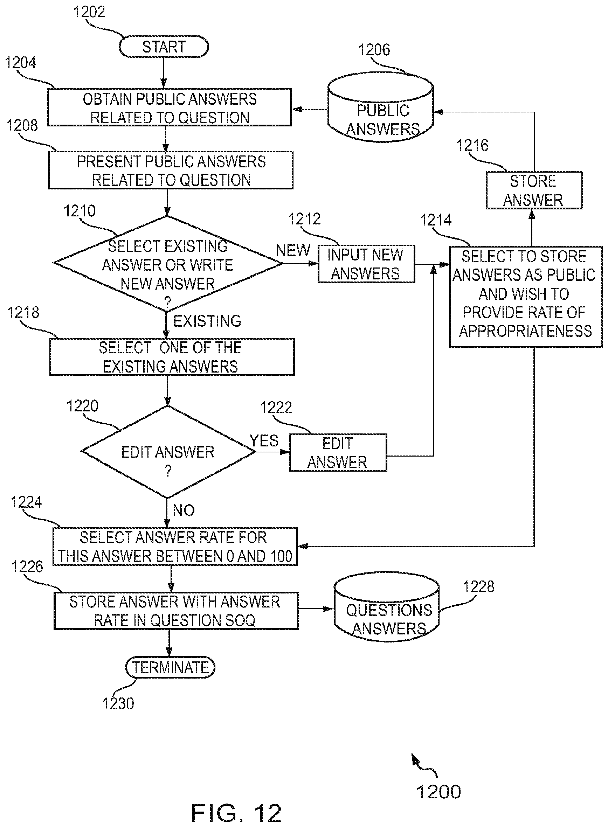

FIG. 12 is a flow diagram 1200 illustrating a procedure for the creation or modification of an answer for a question that is created in a set of questions, in accordance with an exemplary embodiment of the present disclosure. This procedure may be started at step 1202, when a user creates or modifies the answers related to a particular question of a set of questions and may be repeated until the user has created the desired number of answers for the particular question. In step 1204, the system 416 may obtain the answers that may have already been created by other users and are related to the particular question from the database 1206 where the public answers are stored. If such answers are retrieved, they are presented at step 1208 to the user. At step 1210, if the user wishes to create a new answer and not select an existing one (or if no related answer is retrieved in step 1204 and no such answer is presented in step 1208), the user may input the new answer in step 1212. The user may then select step 1214 where the answer may be stored (step 1216) in the respective database, whereas public answers related to existing questions are stored for example, a database 1206. If the user wishes that the answers must be assigned with corresponding rates of appropriateness, the user may select one of the answers and may be led to select an answer rate for selected answer at step 1224 where the answer may be a number between 0 and 100. The answer rate may represent the rate of approval by the user for the particular answer, where for example 0 would denote an utter disapproval and 100 a total approval. At step 1226, the system 416 stores the answer (along with the answer rate) in the database 1228 where the answers of the particular question of the set of questions are stored. The procedure may terminate at step 1230. An algorithm for checking the appropriateness of the answers and answer rates is explained in FIG. 13.

In an example scenario, where the user in step 1210 may select an already existing answer, the user may then be directed to select one of the presented related answers, as shown in step 1218. The user is then provided with a possibility to edit the already selected existing answer at step 1220. If the user chooses to edit the answer, then this may be done at step 1222. After editing the answer, the answer may be stored as public answer if the user selects to store the answer as a public answer at step 1214. For instance, the answer may be stored at step 1216 in the public answer database 1206. At step 1220, if the user chooses not to edit the answers, then, again steps 1224-1230 may follow where, the user provides answer rate, answer rates are stored and the process terminates at step 1230 as described previously.

FIG. 13 is a flow diagram of an operation 1300 illustrating an algorithm for checking the appropriateness of the answers and answer rates, in accordance with an exemplary embodiment of the present disclosure. This algorithm is invoked at step 1302 whenever a user submits a question with answers and answer rates to be stored in the respective database where the questions and answers of the specific set of questions are stored. At step 1304, the system 416 may obtain all the answers of the particular question to be created, along with their respective answer rates. At step 1306, the system 416 may obtain the plain probability, that is the probability that a user such as a first user 402 between two users may choose a correct answer (should there be only one) by making a random choice. The plain probability 1310 may be obtained by calculating the result of the division of 1 by the number of answers of the specific question at step 1310. For example, if a question contains 4 answers, then the plain probability is 1/4 = 0.25. Then the system 416 may obtain the summed probability for all answers at step 1312 where summed probability is the probability that, a user may make a passing response (a response that is graded above the required rate) considering all the answer rates of the answers of the particular question. This probability may be calculated at step 1314 as the result of the multiplication of the sum of all answer grades of all answers of the particular question by the plain probability calculated in step 1310. For example, if the first answer of a question has an answer rate of 50, the second answer of 100, the third answer of 25 and the fourth answer of 0, then the plain probability is 0.25 (1/4) and the summed probability for all answers is (50+100+25+0)^{∗}0.25 = 175^{∗}0.25 = 43.75%.

Further, at step 1316, the system 416 may compare the summed probability for all answers with a threshold for example, 50. If the summed probability is bigger than the threshold, the algorithm may return false at 1326 and terminate at step 1330 as a summed probability of all answers more than 50 may mean that a respondent may have more chances of choosing a passing response to the particular question by choosing an answer randomly than not. If the summed probability for all answers is less than or equal to 50, at step 1320, the system 416 may obtain the number of the biggest rate instances (see, 1322). Herein, the "number of biggest rate instance" refers to a number of the answers that have an equal and biggest answer rate than the rest of the other answers. This number of biggest rate instances may be calculated at step 1322 by looping through all the answers of the particular question, obtaining their answer rate, finding the biggest rate and then by counting the instances of answer rates that are equal to this answer rate. Then, at step 1324, the algorithm may compare the number of biggest rate instances with half of the total number of answers of the particular question. If the number of biggest rate instances is found to be bigger than half of the total number of answers, the algorithm returns false at step 1328 and may terminate at step 1330. This is performed because of an assumption that if more than half of the answers have the same and biggest answer rate, it may be considered that this particular question expresses a more than reasonable extent of ambiguity as far as the intents of its creator are concerned, which ultimately cannot help the major goal that characterizes the questions, the interaction and the system 416, that is of filtering the communication between participants. If at step 1326, the number of biggest rate instances is less than half of the total number of answers of the particular question, then the algorithm returns true at step 1330 and the system 416 may terminate the operation 1300 at step 1330.

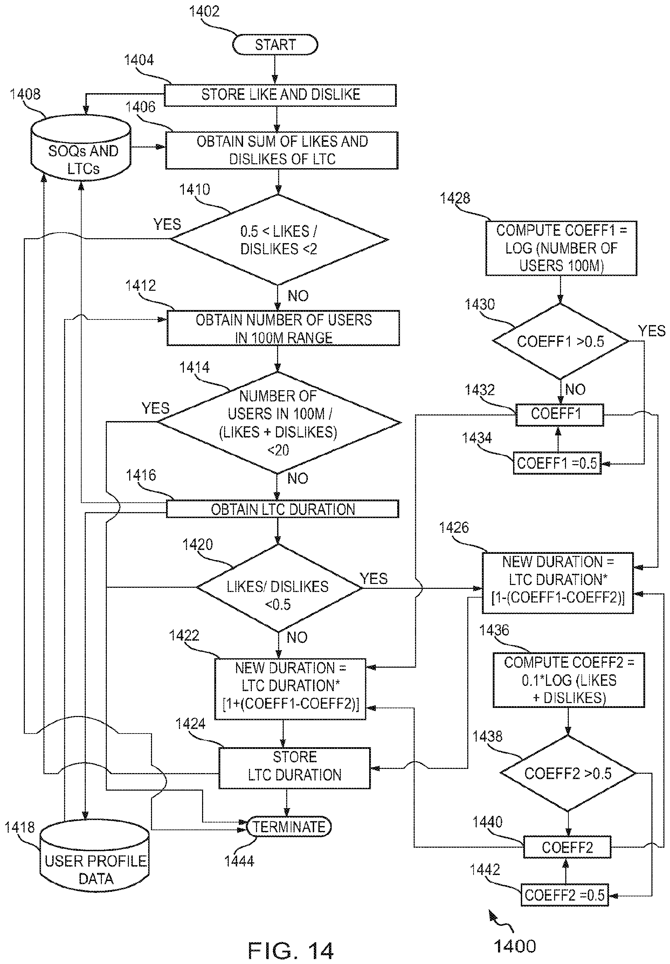

FIG. 14 is a flow diagram 1400 illustrating the algorithm that enables the prolonging the duration or abbreviation of a location tagged content by the likes or dislikes it receives by the users, in accordance with an exemplary embodiment of the present disclosure. The algorithm may be invoked at step 1402 whenever a user selects an LTC tile, views its content and expresses one's opinion for it (an example of step 726 and step 728 of FIG. 7). The system 416 may store at step 1404, the user's like or dislike as increasing numbers in the respective database 1408 that may contain data on LTCs. Then, at step 1406, the system 416 may retrieve from the database 1408, with data on LTCs, the total number of the likes and dislikes expressed for the specific LTC. At step 1410, if the result of the division of the number of likes by the number of dislikes is more than 0.5 and less than 2.0, then the discrepancy between the positive and negative evaluation of the LTC by the users may not be considered so big. Hence, before affecting the duration of the listing of the particular LTC, the system 416 may wait for a bigger discrepancy to be expressed by the users and therefore the algorithm may terminate at step 1444.

On the contrary, if the result of the division of the number of likes by the number of dislikes is less than 0.5 or more than 2.0, then the discrepancy may be considered big and the algorithm for affecting the duration of the listing may be put into action. For example, if the number of likes is 120 and the number of dislikes is 90, then the result of the division of the number of likes by the number of dislikes is 120/90 = 1.33 and the discrepancy between them may not be considered that big for the algorithm to continue, so it may terminate. If on the other hand, the number of likes is 120 and the number of dislikes is 360, then the result of the division of the number of likes by the number of dislikes is 120/360 = 0.33 and the discrepancy between them may be considered big enough for the algorithm to move to step 1412.

At step 1412, the system 416 may obtain the number of the currently active users in a range of 100 meters from the location (or other range, based on the density and population of the user base of the system) in which the LTC is set at, as a rough estimation of the local density of the system's users by retrieving these users from the database 1418, where user profile information, and among others the current location coordinates of users, may be stored. Other methods, taking into account past user local densities or other respective data may also be used for the estimation of users' local density. If at step 1414, the result of the division of the number of the currently active users in a range of 100 meters by the sum of the numbers of likes and dislikes stored for the specific LTC is 20 or more, then the opinion already expressed for the LTC may represent such a small fraction of the users able to express their opinion on it, that the discrepancy estimated as big in step 1410 may not be based on a number of users democratically sufficient to affect the duration of the listing of the particular LTC. Therefore, in this situation, the algorithm may not be put into action and may terminate at step 1444. For example, if the number of likes is 40, of dislikes 110 and the number of the currently active users in a range of 100 meters 10000, the result of 10000/(40+110) = 10000/150 = 66.66 > 20 and the algorithm may terminate. On the contrary if in step 1414, the result of the division of the number of the currently active users in a range of 100 meters by the sum of the numbers of likes and dislikes stored for the specific LTC is less than 20, then the rate of the users having already expressed their opinions on the LTC is not negligible and the algorithm may be put into action. In that case at step 1416, the system 416 may retrieve the duration that may already be set for the particular LTC from the respective database 1408, that may contain data on LTCs.

At step 1420, the system 416 may decide if the LTC is approved or disapproved by the users by comparing the result of the division of the number of likes by the number of dislikes with 0.5. Since it is already established at step 1410 that the result of this division is either less than 0.5 or more than 2, if in this step, the result of the division of the number of likes by the number of dislikes is less than 0.5, then the users should have only expressed their disapproval. Because, the only other case would be for the result to be more than 2, which would signify an approval of the LTC by the users. Therefore, in case of disapproval, the set duration may be shortened to step 1426 and in case of approval, the set duration may be lengthened to step 1422. Both these procedures require the computation of two coefficients, coeff1 at step 1432 and coeff2 at step 1438 which may be computed by sub-functions starting at step 1428 and step 1436 respectively.

Coeff1 may be a result of the multiplication of 0.1 with the decadic logarithm of the number of the currently active users in a range of 100 meters at step 1428. At step 1430, if this result is greater than 0.5, then coeff1 may be reduced to 0.5 (step 1334). Further, coeff2 may be the result of the multiplication of 0.1 with the decadic logarithm of the sum of the number of likes and dislikes expressed for the particular LTC (step 1436). At step 1438, if this result is greater than 0.5, then coeff2 may be reduced to 0.5 (step 1442). These coefficients are used to increase or decrease the rate by which the lengthening or shortening of the availability duration of the LTC takes place. Coeff1 may tend to maximize the decrease or increase of the duration by being subtracted from or added to 1 as seen in steps 1422 and 1426, respectively, and this way by creating the multiplicand by which the duration may be multiplied. This may be so because, coeff1 signifies a big density of users at the location the LTC is tagged at, so generally undesired content of LTCs may not occupy much time span in locations where there are greater opportunities for more positively accepted content to come up.

On the contrary, if content is generally approved in more dense locations, it may be considered that it is worth staying around longer for more users to view it or interact with it. In a non-limiting example, Coeff1 is limited to 0.5 (step 1430 and step 1434) as a very big user density may not cause too vast effects to the duration of the LTCs tagged at the location. Coeff2 may tend to minimize the effect of coeff1 as the number of users having expressed their opinion on the LTC tends to grow to the point of becoming equal to the total number of users in the range of 100 meters. This is accomplished by subtracting coeff2 from coeff1, the result of which will be subtracted from or added to 1 (at steps 1426 and 1422 respectively) to create the coefficient by which the set duration will be multiplied to create the new duration. Coeff2 is limited to 0.5 at step 1438 and step 1442 as a bigger number of expressions to the LTC from the number of current users in the close range may not cause adverse effects to the general algorithm. As an example, if the set duration of a LTC is 90 hours, the number of likes for it is 150, the number of dislikes 420 and the number of the currently active users in a range of 100 meters is 10000, then the new duration will be 90^{∗}(1-(0.1^{∗}log(10000)-0.1^{∗}log(570))) = 90^{∗}(1-(0.4 - 0.28)) = 90 ^{∗} 0.88 = 79 hours. After the new duration has been calculated at steps 1422 and 1426, the new duration may be stored in the database of LTCs at step 1408 and the algorithm may terminate at step 1444.

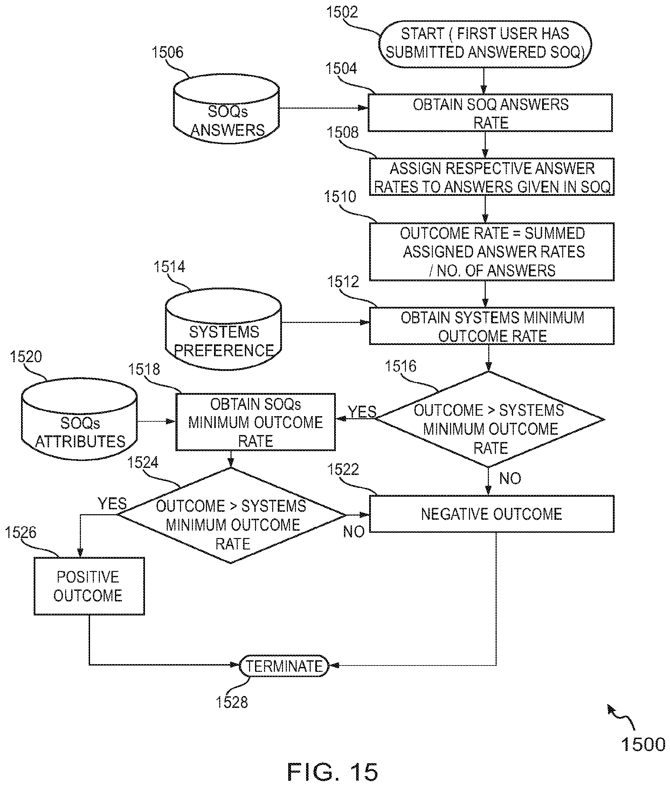

FIG. 15 is a flow diagram 1500 illustrating an algorithm that enables the computation of the outcome of a submitted answered set of questions, in accordance with an exemplary embodiment of the present disclosure. The algorithm may handle the computation of the outcome of an interaction of two users such as interaction of the first user 402 with the second user 406, should the set of questions contain questions with answers that have rates of appropriateness (*i.e.* the score if the answers are provided by the first user 402 and grade if the answers are provided by the second user 406) assigned to them (an example of step 808, FIG. 8). In the opposite case, as in the case where the questions do not contain any pre-given possible answers, the answers of the respondent are sent back to the question setter for "manual" evaluation (not shown).

This interaction entails the first user 402 answering and submitting a set of questions (*i.e.* the first set of questions) created by the second user 406 and as such its outcome depends on the answers submitted by the first user 402. The illustrated algorithm may be invoked at step 1502, when the first user 402 has submitted an answered set of questions. At step 1504, the system 416 may obtain the answer rates or scores for each answer of each question of the particular answered set of questions from the respective database 1506 where the answers related to the specific questions of a specific set of questions may be stored. Then, at step 1508, the system 416 may assign the corresponding answer rates to the answers given by the respondent. At step 1510, the system 416 may calculate the outcome rate or the first rating by summing all the assigned answer rates and dividing the sum by the number of questions of the set of questions. For example if a set of questions contains 3 questions and the respondent answered the first question with an answer that had been assigned an answer rate of 50, the second with an answer that had been assigned an answer rate of 75, and the third with an answer that had been assigned an answer rate of 100, then the outcome rate would be (50+75+100)/3 = 75.

Then, at step 1512, the system 416 may obtain the minimum outcome rate from the respective database 1514 of the system's general preferences and if the outcome rate is less than the system's minimum outcome rate or the predetermined rating as shown in step 1516, then the algorithm may return a negative outcome as shown in step 1522 and may terminate at step 1528. If the outcome rate is equal or more than the system's minimum outcome rate as shown in step 1516, then the system may obtain at step 1518, the minimum desired outcome rate set by the second user from the respective database 1520 where the attributes of the sets of questions are stored. If the outcome rate is less than the minimum desired outcome rate as shown in step 1524, the algorithm may return a negative outcome at step 1522 and may terminate at step 1528. If the outcome rate is equal or more than the minimum desired outcome rate, the algorithm may return a positive outcome as shown in step 1526 and may terminate at step 1528.

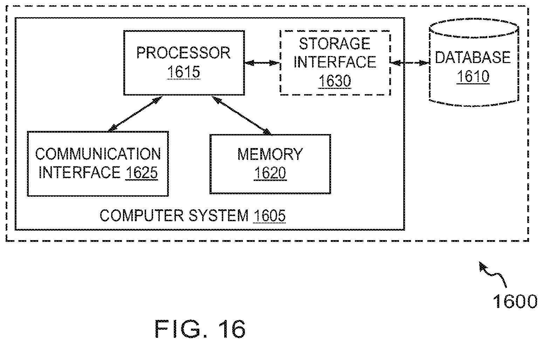

FIG. 16 illustrates a block diagram representation of a server 1600 capable of implementing at least some embodiments of the present disclosure. The server 1600 is configured to host and manage the interaction application interface 412 that is provided to a client device such as the devices 404 and 408, in accordance with an example embodiment of the disclosure. An example of the server 1600 is the servers 114 and 414 shown and described with reference to FIGs. 1 and 4. The server 1600 includes a computer system 1605 and a database 1610.

The computer system 1605 includes at least one processor 1615 for executing instructions. Instructions may be stored in, for example, but not limited to, a memory 1620. The processor 1615 may include one or more processing units (*e.g.,* in a multi-core configuration).

The memory 1620 is a storage device embodied as one or more volatile memory devices, one or more non-volatile memory devices, and/or a combination of one or more volatile memory devices and non-volatile memory devices, for storing micro-contents information and instructions. The memory 1620 may be embodied as magnetic storage devices (such as hard disk drives, floppy disks, magnetic tapes, etc.), optical magnetic storage devices (e.g., magneto-optical disks), CD-ROM (compact disc read only memory), CD-R (compact disc recordable), CD-R/W (compact disc rewritable), DVD (Digital Versatile Disc), BD (Blu-ray® Disc), and semiconductor memories (such as mask ROM, PROM (programmable ROM), EPROM (erasable PROM), flash ROM, RAM (random access memory), etc.).

The processor 1615 is operatively coupled to a communication interface 1625 such that the computer system 1605 is capable of communicating with a mobile device, for example, client device 112 or communicates with any entity within the network 110 via the communication interface 1625.

The processor 1615 may also be operatively coupled to the database 122. The database 122 is any computer-operated hardware suitable for storing and/or retrieving data, such as, but not limited to, the interactions between users 102-108, the data pertaining to the users 102-108, rating computed for the users 102-108, etc. The database 122 may include multiple storage units such as hard disks and/or solid-state disks in a redundant array of inexpensive disks (RAID) configuration. The database 122 may include a storage area network (SAN) and/or a network attached storage (NAS) system.

In some embodiments, the database 122 is integrated within the computer system 1605. For example, the computer system 1605 may include one or more hard disk drives as the database 1610. In other embodiments, the database 1610 is external to the computer system 1605 and may be accessed by the computer system 1605 using a storage interface 1630. The storage interface 1630 is any component capable of providing the processor 1615 with access to the database 1610. The storage interface 1630 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing the processor 1615 with access to the database 1610.

The processor 1615 is communicably coupled with the memory 1620 and the communication interface 1625. The processor 1615 is capable of executing the stored machine executable instructions in the memory 1620 or within the processor 1615 or any storage location accessible to the processor 1615. The processor 1615 may be embodied in a number of different ways. In an example embodiment, the processor 1615 may be embodied as one or more of various processing devices, such as a coprocessor, a microprocessor, a controller, a digital signal processor (DSP), processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The processor 1615 performs various functionalities of the server 1600 as described herein. The disclosed methods with reference to FIGs. 1 to 15, or one or more operations of the flow diagrams of FIGs. 5 to 15 may be implemented using software including computer-executable instructions stored on one or more computer-readable media (*e.g.*, non-transitory computer-readable media, such as one or more optical media discs, volatile memory components (*e.g.,* DRAM or SRAM), or nonvolatile memory or storage components (*e.g.,* hard drives or solid-state nonvolatile memory components, such as Flash memory components) and executed on a computer (*e.g.,* any suitable computer, such as a laptop computer, net book, Web book, tablet computing device, smart phone, or other mobile computing device). Such software may be executed, for example, on a single local computer or in a network environment (*e.g.,* via the Internet, a wide-area network, a local-area network, a remote web-based server, a client-server network (such as a cloud computing network), or other such network) using one or more network computers. Additionally, any of the intermediate or final data created and used during implementation of the disclosed methods or systems may also be stored on one or more computer-readable media (*e.g.,* non-transitory computer-readable media) and are considered to be within the scope of the disclosed technology. Furthermore, any of the software-based embodiments may be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), mobile communications, or other such communication means.

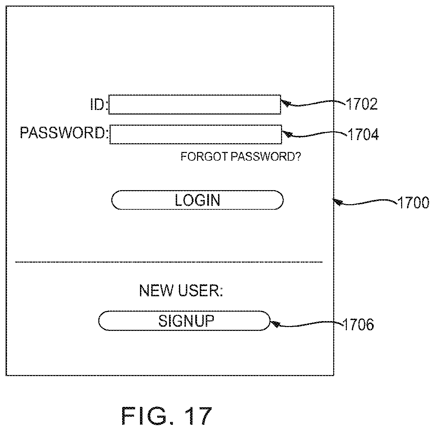

FIG. 17 in one exemplary embodiment of the present disclosure, illustrates a user interface UI 1700 depicting a dashboard of the application 412. An application icon (not shown in Figures) may be displayed to the user on the display screen of the devices 404, 408. The term 'user' in the disclosure hereinafter collectively refers to the first user 402 and/or the second user 406 for the sake of clarity. However, specific references are brought in wherever applicable in the disclosure. Upon invoking the application 412, the user is directed to the UI 1700.

The UI 1700 is a log in or a signup page for the user to either log into an existing account set by the user by receiving login credentials or to register as a new user in the application 412. The UI 1700 primarily includes an 'user ID' tab 1702, a 'password' tab 1704 and a 'signup' tab 1706.

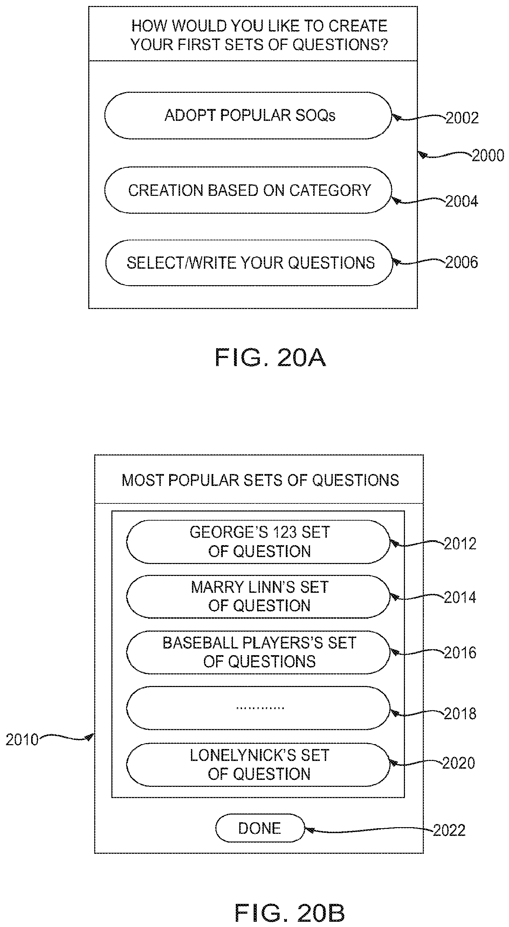

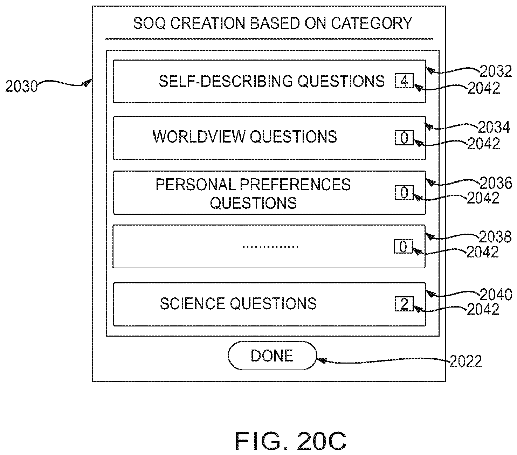

In the 'user ID' tab 1702, a user identification information set by the user at the time of creating the account, is provided. The user identification information may be the unique identification information provided by the user at the time of creation of the account. The user identification information may be provided by the user in forms such as a text format, an image format or any other format as per feasibility and requirement. In the 'password' tab 1704, a user authentication information set by the user at the time of setting up of the account is provided. The user authentication information may be provided by the user in forms such as a text format, an image format or any other format as per feasibility and requirement. In one implementation, the user authentication information may be a fingerprint authentication of the user via a finger print scanner of the device 404 or 408. The user authentication information is provided to authenticate the user identification information and to gain access to the account created by the user. After verifying the login credentials *i.e.* the user identification information and the user authentication information, the system 416 authenticates the user account and directs the user to a UI 2000 (for *e.g.* as shown in FIG. 20).

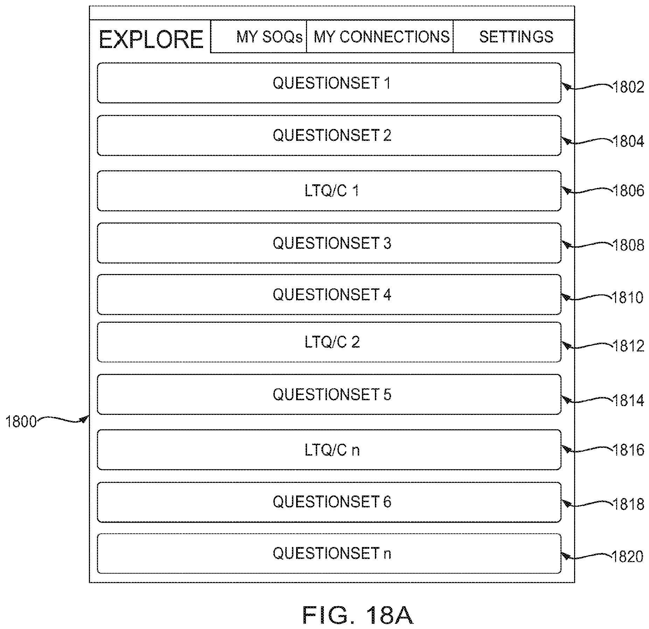

FIGs. 18A-18D are screen displays of a possible implementation of the interface UI 1800 that provides the user of the system 416 with the available sets of questions in a specific location and location tagged content. It is the interface that may be active and on display when a user is at step 718 of FIG. 7.

The screen display 1800 of FIG. 18A presents a list that may contain tiles with sets of questions 1802, 1804, 1808, 1810, 1814, 1818 and 1820 from proximal users and location tagged content or sets of questions 1806, 1812, 1816 that is tagged with a proximal location to the one the user finds oneself in. In the example illustrated the sets of questions tiles 1802, 1804, 1808, 1810, 1814, 1818 and 1820 and location tagged content or sets of questions tiles 1806, 1812, 1816 are sorted in order of proximity. In one other implementation, the sets of questions list tiles 1830 may be ordered in a separate sub-list from the location tagged content tiles *i.e.* a location tagged question set tile 1850 and a location tagged content list tile 1870.

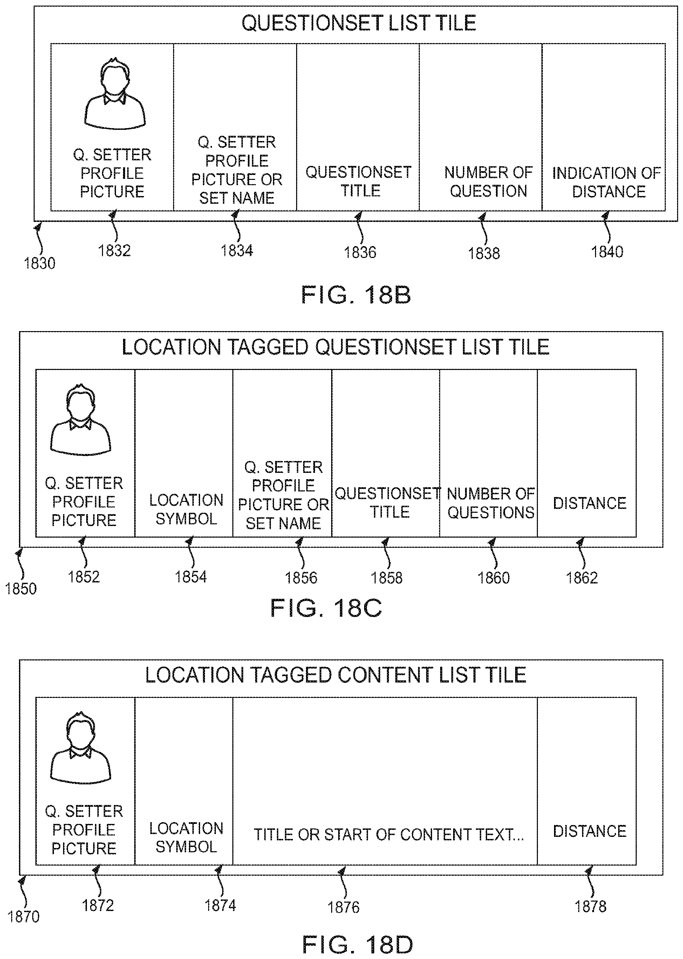

The question set list tile 1830, as shown in FIG. 18B, may contain a question setter's profile image and a profile name 1832, a set of questions name tile 1834, a title of the set of questions 1836, number of the questions tile 1838 and a distance indication tile 1840. The name tile 1834 indicates the name assigned by the user while creating the set of questions. The title tile 1836 indicates the title of the question set created by the user. Further, the number of questions tile 1838 indicates the number of questions available in this question set. The distance indication tile 1840 indicates the distance between the question setter and the user viewing the interface 1800.

The location tagged question set tile 1850, as shown in FIG. 18C, includes a question setter's profile image 1852, a symbol 1854 indicating that the set of questions is location tagged and the question setter's profile name 1856. The tile 1850 also includes a set name tile 1856 for the set of questions created and a title tile 1858 for indicating the title of the set of questions. A number of the questions tile 1860 is also provided in tile 1850, indicating the number of questions in the tile 1850. Further, a distance tile 1862 is provided in the tile 1850 for indicating the distance between the exact tagged location and the user viewing the interface 1800.

The location tagged content list tile 1870, as shown in FIG. 18D, may contain the question setter's / content creator's profile image 1872 and a symbol 1874 indicating that that content is location tagged. A title tile 1876 and a distance tile 1878 may also be provided in the tile 1870. In the title tile 1876, the location tagged content or the first words of the actual text of the content is indicated. In the distance tile the distance between the exact tagged location and the user viewing the interface 1800 is depicted.

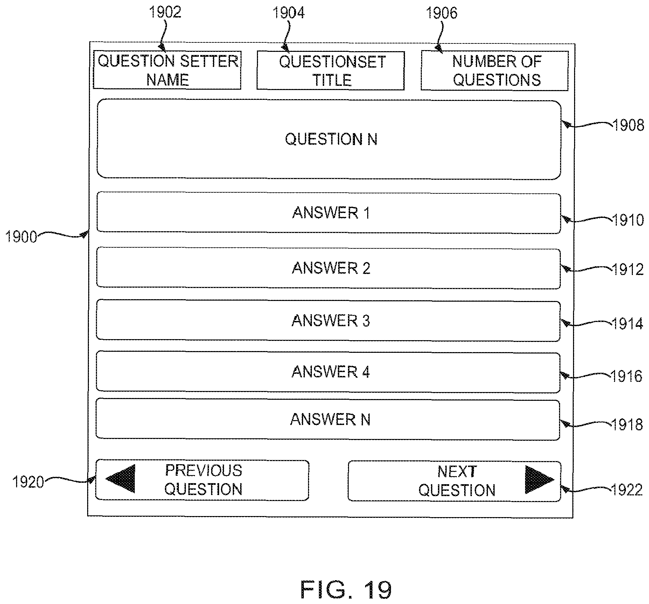

FIG. 19 is a screen display of a possible implementation of an interface UI 1900 that provides the user of the system 416 with each one of the questions contained in a set of questions and the answers available for that question. The UI 1900 also provides the possibility to select the preferred answers and navigate oneself to all the questions of the set of questions and finally to submit the answered set of questions. The UI 1900 may be active and on display when a user is at steps 804 and 806 of FIG. 8, which displays the respondent - question setter interaction procedures of the system 416.

The UI 1900 includes tabs 1902, 1904 and 1906 that may characterize a set of questions along with a question 1908. The question 1908 includes a list of the available answers 1910-1918 that may accompany the question. Navigation tiles 1920 and 1922 are provided, for guiding the users to the other questions in the set of questions. In one implementation, the tab 1920 guides the users to a previous question, while the tab 1922 guides the user to a next question. The tab 1902 includes a text area where the name of the question setter is displayed, or the name the question setter has set to be displayed for this particular set of questions. The tab 1904 also includes the text area where the title of the set of questions is displayed. Further, the tile 1906 includes the text area where the number of the particular question in the array of questions in the particular set of questions is displayed. The text or other content type of the question may be displayed in the tile 904 illustrated and following that section may the answers accompanying that particular question be displayed 1910-1918. There may also be open questions where the respondent is supposed to fill an answer text area with one's answer, or there may be other types of answering available, like multiple answers or ranking given answers or any other type of answering (not shown in Figures). The respondent may select the answer tile that seems fittest for the particular answer and may move forward to the next question or backward to the previous by using the respective arrows illustrated as tiles 1920 and 1922 or by using a gesture like swiping. Once the respondent has answered all the questions one may be notified that one may submit the set of questions and one way that this may be accomplished may be by pressing on the notification or another type of icon or button that may appear on screen.

FIGs. 20A-20C illustrates a possible implementation of the interfaces that provide the user of the system 416 with available ways to create sets of questions. It is the interface that may be active and on display when a user has just signed up in the system 416 (as described in FIG. 17) and its purpose is to help the user create one or more sets of questions in the most efficient way so that this user exploits the full potential of the system 416 right from the start.

Referring to FIG. 20A, possible ways for creating sets of questions is illustrated as UI 2000. The UI 2000 includes an adopt questions button 2002 which offers the possibility for adopting sets of questions to the user, that have been created by other users of the system 416 and have become public with the consent of their creators. On invoking the button 2002 the user is directed to the UI 2010 (for *e.g.* as shown in FIG. 20B) which lists the most popular sets of questions as tiles 2012-2020, possibly ranked based on the rate of their adoption by other users. The tiles 2012-2020 may be displayed as already illustrated in FIG. 18C but without the distance indication. Users may tap on one or more of these tiles for selection of the sets of questions and then choose to end this procedure by tapping on the appropriate button 2022 or by any other appropriate means. This will create a copy of the selected set(s) of questions with every feature of them (name, title, questions, answers) but with a broadcast feature preset to "on" and the possible assignment of rates of appropriateness to answers in each question, initially set by the creator of the set of questions, discarded. Users may also select a set of questions (for example by long tapping on the respective list tile, or by any other appropriate means) to view its questions and answers in a similar way as already described. After viewing the set of questions, the user can go back (instead of answering and sending it) and decide if they wish to select it or not, with the selection to be executed in the way described above.

A second way to easily create a set of questions could be the automatic creation of a set of questions by the system 416, with the user only suggesting desirable categories of questions that this user wishes the new set of questions to be composed of. Such a possibility of the system 416 is possible by selecting a creation based on category button 2004, which routes the user to an interface UI 2030 (for *e.g.* as shown in FIG. 20C). The UI 2030 lists all the categories 2032-2040 of the public questions available in the system's databases or other storage mediums. Users may select one or more categories of questions 2032-2040 and they may select a number of questions for each category as depicted via the text box 2042, or the system may assign a random or proportionate number for questions of each category. Users may enter each category to view the questions it contains (for example by long tapping on the respective category list tile, or by any other appropriate means). On selecting the desired categories of questions 2032-2040 (and respective numbers of questions for each category, if desired) the system 416 creates a set of questions for the user with a default name and the broadcast trait preset to "on". As in the case of an adoption of a set of questions, users may edit and bring the set of questions as closely to their desires as they feel it is necessary which is explained in subsequent sections in the description. The user may then choose to end this procedure by tapping on the appropriate button 2022 or by any other appropriate means.

A third way to create a set of questions could be the selection or creation of each question by the users themselves, which is possible when the user invokes a select or write your questions button 2006. Upon invoking the button 2006, the user is directed to a page which allows him to select or write his own questions, which is explained in detail in the subsequent section of the description.

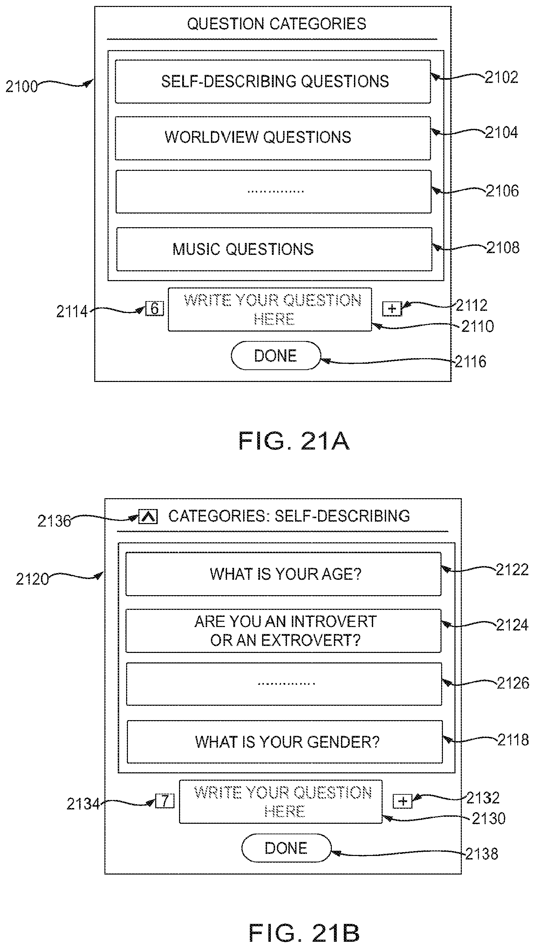

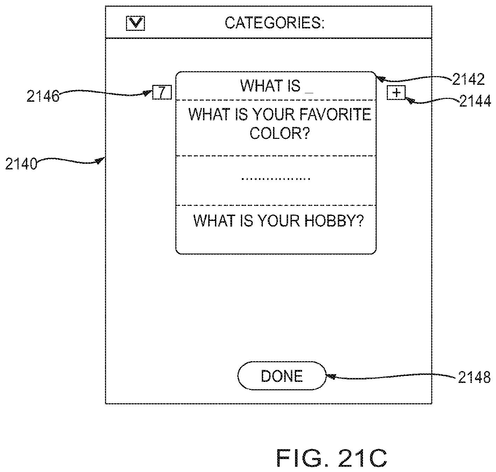

FIGs. 21A-21C illustrates screen displays of a possible implementation of the interfaces that provide the user of the system 416 with a way to create questions for a set of questions.

Referring to FIG. 21A, a UI 2100 is illustrated, which is displayed upon invoking the button 2006 of the UI 2000. The UI 2100 displays the question categories that may be available in the database 122. The UI 2100 also assists the users in creating a new question in their set of questions or edit one already created. The users may be initially provided with the categories 2102-2108 of the public questions available in the system's databases or other storage mediums and they may also be provided with a text field 2110 where they may write their question without any prior selecting of a category or of a question in a category. The UI 2100 also includes an add button 2112 which enables the user to add the question created in the text field 2110 and a text box 2114 which indicates the total number of the questions already existing in the current set of questions. The user may then choose to end this procedure by tapping on the appropriate button 2116 or by any other appropriate means.

Using the categories assistance, they may tap or invoke on a specific category, say, the self-describing questions category depicted in the button 2102. On selecting the button 2102, the user is directed to a UI 2120 (for *e.g.* as shown in FIG. 20B) where the questions contained in this category are listed as tabs 2122-2128. Tapping on a desired question, it may automatically fill a text field 2130. An add button 2132 is provided in the UI 2120, so that the user can add the particular question to their set of questions. Further, the UI 2120 also includes a text box 2134 which indicates the total number of questions that this set of questions contains. Users may also not use the categories assistance at all and even switch off the categories view by tapping on a drop-down button 2136. In this scenario, the user may be directed to the UI 2140 (for *e.g.* as shown in FIG. 20C).

The UI 2140 also includes a text field 2142 which allows the users to type in the respective text field for creating the questions. This feature acts as a possible assistance to the user for creating question on top of already existing questions in the system's databases or other storage mediums. The UI 2140 also includes an add button 2144 which upon tapping may allow the user to add the typed in question. The UI2140 also includes a text box 2146 for indicating the number of questions in the set of questions. Upon revising the questions suitably, the user may invoke a button 2148 for exiting the question creation interface.

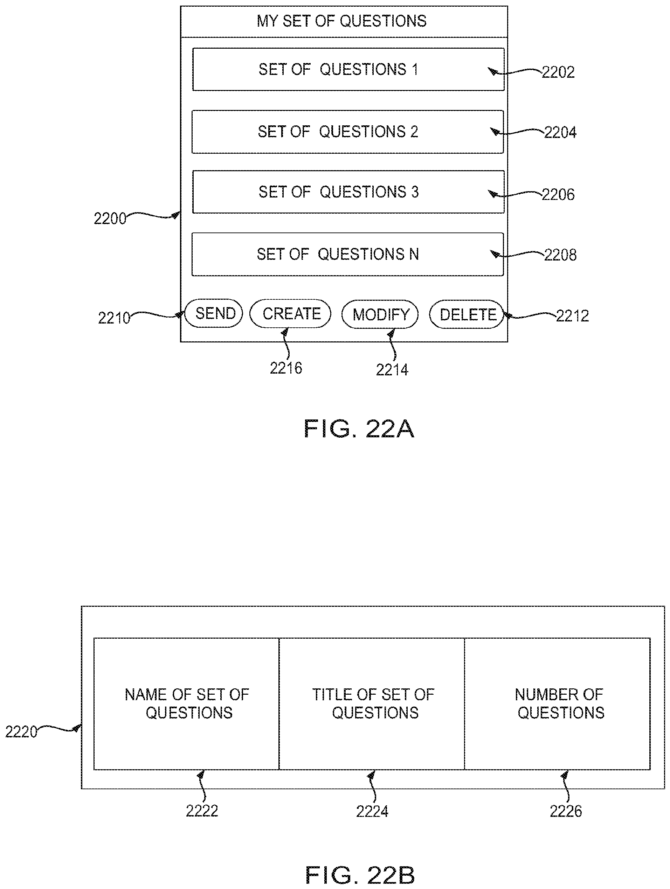

FIG. 22A is a screen display of a possible implementation of an interface UI 2200 that provides users of the system 416 with a way to view the sets of questions they have already created and to select if they wish to create a new set of questions or modify, delete and send already existing sets of questions. The UI 2200 includes the already created sets of questions depicted via tiles 2202-2208. Upon invoking each of these tiles, the user is routed to a UI 2220 (for *e.g.* as shown in FIG. 22B). The UI 2220 may depict the information as shown in, that is the name of the set of questions via a tile 2222, a title tile via 2224 and a number tile 2226 indicating the number of questions it contains or an indication of the fact that this is a chained set of questions. Users may tap (or use any other means available) on a specific set of questions to select it and choose to send the set of questions to an already connected user via invoking a 'send tab' 2210 or delete the set by invoking the 'delete tab' 2212 or modify the set by invoking the 'modify tab' 2214. The UI 2200 also includes a create tab' 2216 for creating a new set of questions which is explained in detail in the subsequent sections of the description.

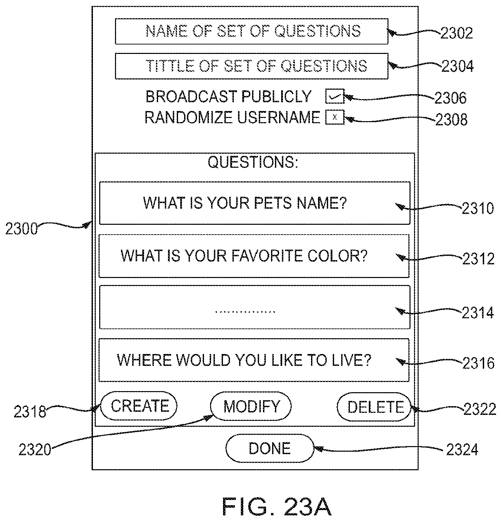

FIGs. 23A-23C contains screen displays of another possible implementation of the interfaces that provide users of the system with a way to create a new set of questions.

Referring to FIG. 23A, a UI 2300 is depicted. The UI 2300 depicts some of the basic elements of a set of questions which are available for the user to set and edit. The UI 2300 includes a name field 2302, which enables the user to set a name for a particular set of questions. The user 2300 may set the name the set of questions one's own help and may not become public. The UI 2300 also includes a title field 2304, which enables the users to set a title for that set of questions, that is publicly displayed. The modified set of questions may be broadcasted publicly, by checking the broadcast feature 2306. The set of questioned may be broadcasted without a proper username but with a random username instead (the system will create a small number of random usernames and let the user choose between them in an appearing dialog, not shown). For randomizing the username, a random username check box 2308 is checked. Further, the users may view all of the existing or created questions via tiles 2310-2316 and may find the ways to edit these questions, possibly by using routes that lead them to create new questions and modify and delete existing questions, as shown in tabs 2318, 2320 and 2322 respectively. The tabs 2318-2322 function similar to the tabs as already described. If the users arrive to this procedure by following routes for creating a new set of questions, then the name field 2302 may be blank and the title field filled 2304 with a default title, the checkboxes 2306 and 2308 marked with the default values and no questions will be presented. Upon revising the questions suitably, the user may invoke a button 2324 for exiting the question creation interface.

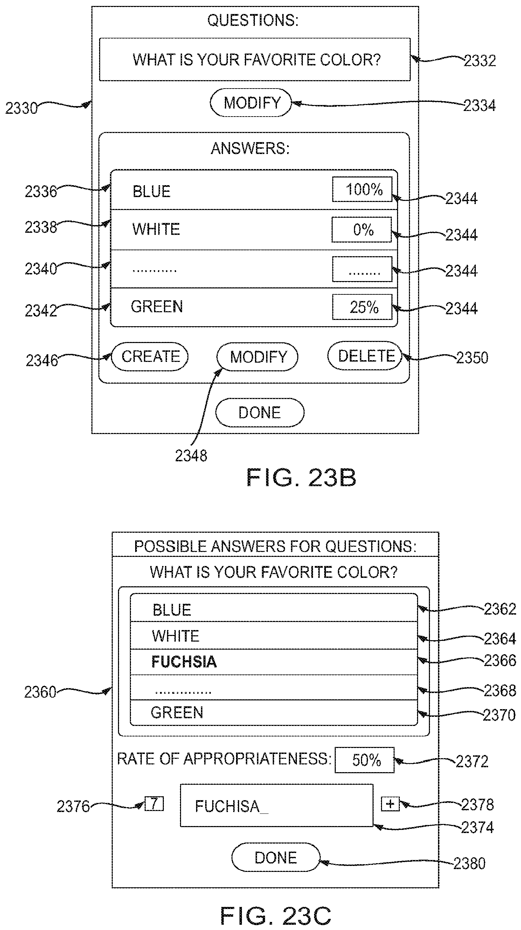

Referring to FIG. 23B, a UI 2330 is depicted. The UI 2330 enables the user to set or modify answers for each of the questions. The UI 2330 includes the tab 2332 which displays the question to which the user is modifying or setting the answers to. The user may invoke a modify button 2334 for modifying the question. The answers are depicted via tabs 2336-2342, along with a rate of appropriateness or the score or the grade assigned for each of the answers via the text box 2344. In a similar way to the handling of questions, these answers may be created, modified and deleted, by tapping on buttons 2346, 2348 and 2350 respectively. Upon invoking one of the buttons 2348 and 2350, the user is directed to the UI 2360 (for *e.g.* as shown in FIG. 23C). The UI 2360 includes the question to which the answers are modified or created. The UI 2360 includes tabs 2362-2370, which displays possible answers *i.e.* the answers that other users may have chosen for the question. A rate of appropriateness may also be defined for the answer via a text box 2372. Further, a text field 2374 is provided for modifying the answer for the question. A text box 2376 is also provided for indicating the number of answers existing for the question. If this procedure be initiated for creating a new answer, text box 2374 and 2372 may be blank. Users may edit or complete the text box 2376 with the answer they wish to add and by tapping on an add button 2378. Upon adding the answer, the number depicted in the text box 2376 may increase suitably. Should they tap on one of the possible answers 2362-2370, this answer may appear in the text field 2374 for users to add the answer. Should users already have completed the rate of appropriateness for this answer, this rate will be assigned to the answer when they tap on the add button 2378. Should users wish to end this procedure, they may tap on the button 2380 which will lead to the UI 2320.

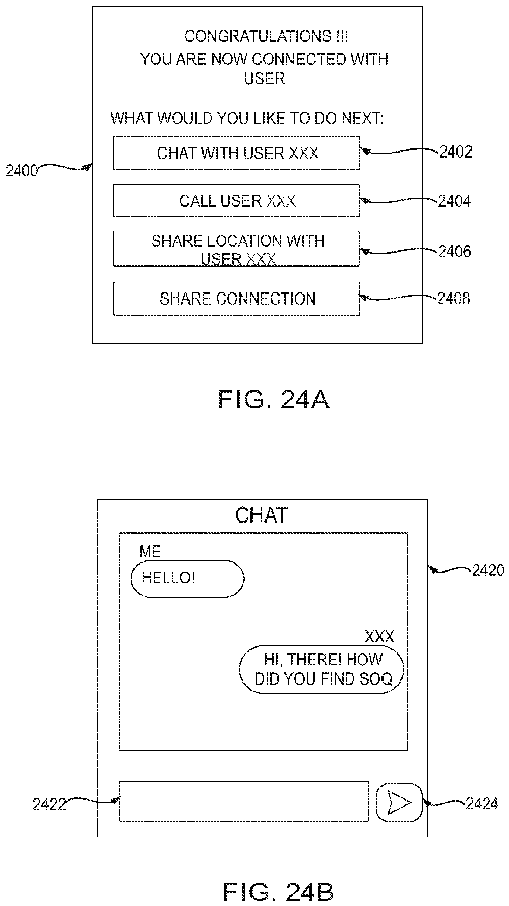

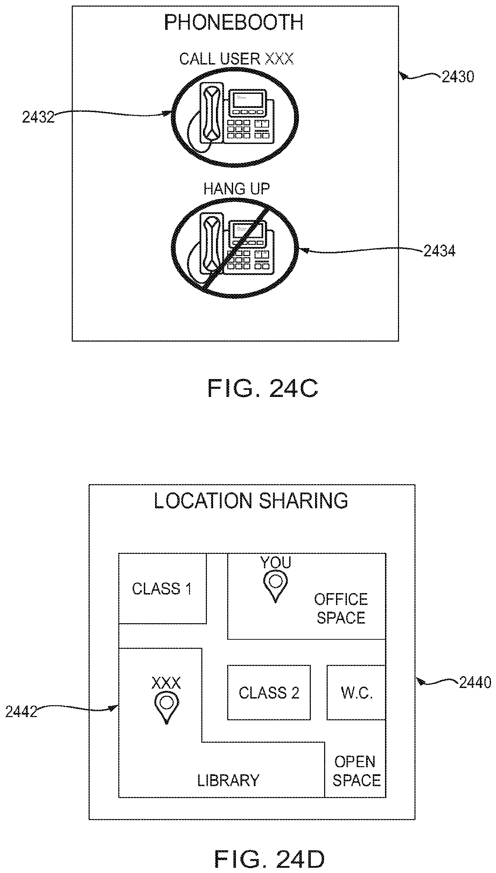

FIGs. 24A-24D contain screen displays of a possible implementation of the interfaces that provide users of the system with ways to intensify their connection with other users with whom a successful interaction has taken place.

Referring to FIG. 24A, a UI 2400 is displayed, which provides the users with the available possibilities of further interaction with other users between whom a successful interaction based on the exchange of set of questions has taken place. These possibilities may be implemented as routes, which users may follow to continue their communication to connected users. The UI 2400 includes a chat tab 2402, a call tab 2404, a location share tab 2406 and a share connection tab 2408.

Upon invoking the chat tab 2402, the user is directed to a UI 2420 (for *e.g.* as shown in FIG. 24B), which depicts a message exchange board. The UI 2420 enables the user to exchange messages with another user via a text box 2422. A send button 2424 may be provided for submitting the messages to another user. The messages may appear in a chronological order with newer messages appearing below older ones and messages coming from the user of the client device may appear on the left side of the message board with a specific background color (not shown in Figures). The messages received from the connected user may be demarcated appearing on the right side of the message board with a different background color (not shown in Figures). The name of the sender of each message may appear on top of the message, whereas the name of the user of the client device may appear as the first-person singular pronoun.

Upon invoking the call tab 2404, the user is directed to a UI 2430 (for *e.g.* as shown in FIG. 24C). the UI 2430 depicts a voice-call function served by two buttons (2432 and 2434), wherein the button 2432 initiates the voice-calls while the button 2434 ends the voice-call. The voice-call may be enabled deploying the Application Programming Interfaces fused in the client device's Operation System that may handle voice data transfer.

Upon invoking the location share tab 2406, the user is directed to a UI 2440. The UI 2440 depicts a map 2442 where both connected users, which may the first user 402 and the second user 406 can be traced. This location sharing function is enabled in places where the space administrators have already mapped the enclosing space using the system's mapping procedures or other available external mapping services. Users that find themselves in such places may give their consent to the system 416 so that the system 416 may acquire their location data from their client devices using the client devices available location Application Programming Interface. In the case of a connection to another user of the system 416, the connected users may give further consent to the system 416 (possible accepting mutual location sharing requests appearing as dialogs) to share their acquired location data to each other, so that the two connected parts may establish a physical contact, should they wish so.

Various embodiments of the disclosure, as discussed above, may be practiced with steps and/or operations in a different order, and/or with hardware elements in configurations, which are different than those which, are disclosed. Therefore, although the disclosure has been described based upon these exemplary embodiments, it is noted that certain modifications, variations, and alternative constructions may be apparent and well within the spirit and scope of the disclosure.

Although various exemplary embodiments of the disclosure are described herein in a language specific to structural features and/or methodological acts, the subject matter defined in the appended claims is not necessarily limited to the specific features or acts described above. Rather, the specific features and acts described above are disclosed as exemplary forms of implementing the claims.

## Claims

1. A computer implemented method, comprising:
receiving, by a processor associated with a server system, a connection request from a device associated with a first user;
facilitating, by the processor, a first set of questions to the first user from the server system;
receiving, by the processor, a response to each of the first set of questions from the first user;
receiving, by the processor, a first evaluation input generated from evaluating the response to each of the first set of questions, the first evaluation input generated from at least one of:
a manual input from a second user associated with the first set of questions;
an automatic input based on analyzing the response; and
establishing, by the processor, a connection between first user and the second user associated with the first set of questions based at least in part on the first evaluation input.

2. The method as claimed in claim 1, wherein the manual input is a manual evaluation of the response for each of the first set of questions by the second user, based on its relevancy, for generating the first evaluation input.

3. The method as claimed in claim 1, wherein the automatic input is an input generated by the processor upon comparing the response provided by the first user with a first preset response defined by the second user, based on its relevancy, for generating the first evaluation input.

4. The method as claimed in claim 3, further comprising
storing, by the processor, the first preset response defined by the second user for each of the first set of questions in a database associated with the processor; and
electronically providing an option to the second user to edit the first preset response and include response to the new questions included in the first set of questions.

5. The method as claimed in claim 3, further comprising, determining, by the processor, a first rating based on the comparison between the response provided by the first user and the first preset response, wherein the processor generates the first evaluation input, when the first rating exceeds a predetermined rating set by the second user.

6. The method as claimed in claim 1, further comprising assigning, by the processor, a score to the response provided by the first user for each of the first set of questions, wherein the score is assigned by the processor based on relevancy of the response to each of the first set of questions with the corresponding first preset response defined by the second user, for generating the first evaluation input.

7. The method as claimed in claim 1, further comprising, setting, by the processor, a time limit to the first user for responding to the first set of questions.

8. The method as claimed in claim 1, wherein the first set of questions from the server system comprises one or more questions, set or selected by the second user, wherein the one or more questions are based on at least:
a geographical location of the second user,
a time zone of the second user, and
one or more genre.

9. The method as claimed in claim 1, further comprising facilitating, by the processor via a communication interface, at least one of:
an instant messaging system between the first user and the second user;
a voice calling system between the first user and the second user; and
a location sharing system between the first user and the second user;
upon establishing the connection between the first user and the second user.

10. The method as claimed in claim 1, further comprising:
storing, by the processor, the first set of questions in the database; and
electronically providing an option to the second user to edit the first set of questions, include new questions in the first set of questions.

11. The method as claimed in claim 1, further comprising,
providing, by the processor, a second set of questions to the second user; receiving, by the processor, a reply from the second user for each of the second set of questions;
receiving, by the processor, a second evaluation input generated from evaluating the reply to each of the second set of questions, the second evaluation input generated from at least one of:
a non-automatic input from the first user associated with the second set of questions; and
an automated input based on analyzing the response; and
retaining, by the processor, the connection between the first user and the second user based at least in part on the second evaluation input.

12. The method as claimed in claim 11, further comprising providing, by the processor, the second set of questions to the second user by the first user upon:
receiving the second evaluation input for the response provided by the first user; or
receiving the response for the first set of questions from the first user.

13. The method as claimed in claim 11, wherein the non-automatic input is a manual evaluation of the response for each of the second set of questions by the second user, based on its relevancy, for generating the second evaluation input.

14. The method as claimed in claim 11, wherein the automated input is an input generated by the processor upon comparing the reply provided by the second user with a second preset response defined by the first user, based on its relevancy, for generating the second evaluation input.

15. The method as claimed in claim 14, further comprising, determining, by the processor, a second rating based on the comparison between the reply provided by the second user and the second preset response, wherein the processor generates the second evaluation input, when the second rating exceeds a predetermined limit set by the first user.

16. The method as claimed in claim 1, further comprising assigning, by the processor, a grade to the reply provided by the second user for each of the second set of questions, wherein the grade is assigned by the processor based on relevancy of the reply to each of the second set of questions with the corresponding second preset response defined by the first user, for generating the second evaluation input.

17. The method as claimed in claim 1, wherein the server system is at least one of:
a user device in a peer to peer network configuration;
an external server system communicably coupled to a user device of the first user and a user device of the second user; and
a server device comprising one or more web servers, one or more application servers and one or more database servers and communicably coupled with a load balancer.

18. A system comprising:
a memory comprising stored instructions; and
a processor configured to execute the stored instructions to cause the system to perform at least:
receiving a connection request from a device associated with a first user;
facilitating a first set of questions to the first user from the server system;
receiving a response to each of the first set of questions from the first user;
receiving a first evaluation input generated from evaluating the response to each of the first set of questions, the first evaluation input generated from at least one of:
a manual input from a second user associated with the first set of questions;
an automatic input based on analyzing the response; and
establishing a connection between first user and the second user associated with the first set of questions based at least in part on the first evaluation input.

19. The system as claimed in claim 18, wherein the processor is configured to perform at least:
providing a second set of questions to the second user;
receiving a reply from the second user for each of the second set of questions;
receiving a second evaluation input generated from evaluating the reply to each of the second set of questions, the second evaluation input generated from at least one of:
a non-automatic input from the first user associated with the second set of questions;
an automated input based on analyzing the response; and
retaining the connection between the first user and the second user based at least in part on the second evaluation input.

20. The system as claimed in claim 19, wherein the processor is configured to provide the second set of questions to the second user by the first user upon:
receiving the second evaluation input for the response provided by the first user; or
receiving the response for the first set of questions from the first user.
